# EUROPÄISCHE PATENTSCHRIFT

(11) **EP 4 520 603 B1**
(45) Veröffentlichungstag und Bekanntmachung des Hinweises auf die Patenterteilung: **27.05.2026**
(21) Anmeldenummer: 24209133.8
(22) Anmeldetag: 12.02.2020
(51) Int. Cl.: B60T 13/66, B60T 8/40, B60T 7/04

(54) **BETÄTIGUNGSEINRICHTUNG FÜR EIN GANZ ODER TEILWEISE HYDRAULISCH WIRKENDES BREMSSYSTEM FÜR EIN FAHRZEUG**
CONTROL DEVICE FOR A FULLY OR PARTIALLY HYDRAULICALLY OPERATED BRAKING SYSTEM FOR A VEHICLE
DISPOSITIF D'ACTIONNEMENT POUR UN SYSTÈME DE FREINAGE À ACTION ENTIÈREMENT OU PARTIELLEMENT HYDRAULIQUE POUR UN VÉHICULE

(30) Priorität: 12.02.2019 DE 202019101586 U; 21.03.2019 DE 102019107334
(43) Veröffentlichungstag der Anmeldung: 12.03.2025
(62) Teilanmeldung aus: 20706409.8
(73) Patentinhaber: IPGATE AG, 8808 Pfäffikon SZ (CH)
(72) Erfinder: Leiber, Thomas, 22203 Rogoznica (HR); Lieber, Heinz, 71739 Oberriexingen (DE)
(74) Vertreter: DTS Patent- und Rechtsanwälte PartmbB

(56) Entgegenhaltungen:
- WO-A1-00/74987
- DE-A1- 102013 224 783
- DE-A1- 102015 103 860
- DE-C2- 3 919 842

## Beschreibung

Die vorliegende Erfindung betrifft ein Verfahren zu einer Betätigungseinrichtung für ein ganz oder teilweise hydraulisch wirkendes Bremssystem für ein Fahrzeug, mit einem Hauptbremszylinder, der eine Kolben-Zylinder-Einheit mit einem Kolben und einem Arbeitsraum aufweist, wobei der Arbeitsraum hydraulisch mit einem Vorratsbehälter und einem Pedalgefühlsimulator verbunden oder verbindbar ist und mechanisch über eine Betätigungseinrichtung, insbesondere einem Bremspedal, verbunden ist und der Arbeitsraum über mindestens ein stromlos offenes Ventil mit mindestens einem Bremskreis verbindbar ist, und dass mindestens eine einem Bremskreis zugeordnete hydraulisch wirkende Radbremse, der je mindestens ein eigenes steuerbares Schaltventil zugeordnet ist, mit dem die Radbremse mit dem jeweiligen Bremskreis zum Druckaufbau und Druckabbau, insbesondere im Bremskraftverstärkerbetrieb verbindbar ist, sowie mit einer von einem Elektromotor angetriebenen Druckversorgung, deren Kolben mittels des Elektromotors im Zylinder verstellbar ist, mindestens einer Ventilanordnung mit Magnetventilen für eine radindividuelle Druckregelung, und mindestens einer elektrischen Steuereinheit zur Ansteuerung zumindest von Ventilen der Ventilanordnung und des Motors der Druckversorgung, sowie mindestens einem gesteuerten Auslassventil, über das direkt Hydraulikmedium, insbesondere bei ABS-Funktion oder Regelbetrieb, aus der jeweiligen Radbremse oder dem Bremskreis in den Vorratsbehälter ableitbar ist.

### Stand der Technik

Die Anforderungen, insbesondere Sicherheitsanforderungen beim halbautomatisiertem (HAD) und vollautomatisiertem (FAD) Fahren haben großen Einfluss auf die Systemgestaltung. Diese bedingen redundante und teilredundante Systeme und Komponenten.

Im Vordergrund stehen hier die Druckversorgung, bei der die Bremskraft oder der Druckaufbau auch ohne Fahrerfuß gewährleistet sein muss. Entsprechend muss auch die elektronische Steuerung für diese Funktion ausgebildet sein. Für Level 3, insbesondere Level 4, muss ebenfalls die ABS-Funktion auch im Fehlerfalle gewährleistet sein.

Bei einer redundanten Druckversorgung kann auch ein Systemkonzept ohne Tandem-HZ, nur mit sog. E-Pedal oder für Level 5 nur mit einem Bremsschalter ausgeführt werden. Hierbei sind folgende Patenanmeldungen erwähnenswert: DE 10 2017 222 450 offenbart ein Hydrauliksystem mit nur einem Hauptzylinder, redundanter Druckversorgung, Trennventile zum Hauptzylinder und einen Wegsimulator. Ein Bypassventil zwischen den beiden Bremskreisen ermöglicht bei Ausfall einer Druckversorgung der zweiten Druckversorgung beide Bremskreise zu versorgen. Dieses stromlos offene Ventil ist extrem sicherheitsrelevant, da bei Ausfall des Ventils und z. B. Bremskreisausfall, ein Totalausfall der Bremse die Folge sein kann. Außerdem ist der Ventilaufwand sehr hoch.

Die DE 10 2017 222 435 und DE 10 2016 225 537 zeigen ein ähnliches Konzept, jedoch mit E-Pedal, reduzierter Druckversorgung und Bypassventil. Alle Systeme verwenden für die ABS-Funktion beim Druckabbau ein sogenanntes Auslassventil. Gerät beim Öffnen des Ventils ein Schmutzpartikel in dessen Ventilsitz, so kann dies einen Bremskreisausfall bei der nächsten Bremsung bewirken.

DE 10 2017 207 954 zeigt ein Systemkonzept mit redundanter Druckversorgung und ohne Auslassventile für die ABS-Druckregelung. Hier wird das sogenannte Multiplex-Verfahren, welches bereits in DE 102005055751 und DE 102009008944 A1 beschrieben ist, eingesetzt, bei dem die Drucksteuerung für ABS von der Druckversorgung durch Volumenmessung und Druckinformation erfolgt. Hierbei werden auch die Schaltventile zur Drucksteuerung redundant verwendet. Ein Sicherheitsrisiko entsteht, wenn die Kolbendichtung oder ein Rückschlagventil zum Vorratsbehälter ausfällt und das Schaltventil durch Schmutzpartikel undicht ist, was ebenso einen Totalausfall der Bremse zur Folge hat.

Oben genannte Beispiele zeigen das Problem der schlafenden Fehler, die bei Doppelfehlern kritisch werden, wenn diese nicht vor dem Bremsmanöver von der Diagnose erfasst werden können.

Das Packaging oder Bauvolumen von Bremssystem ist ebenfalls von großer Bedeutung. Insbesondere bei Systemen mit HAD (halbautomatisiertem) und FAD (vollautomatisiertem Fahren) sind viele Varianten von Level 2 mit Tandemhauptzylinder (THZ) oder Single-Hauptzylinder (HZ) bis Level 5 ohne THZ oder HZ in der Gestaltung der Bauformgestaltung zu berücksichtigen. Insbesondere sind 3 - 5 Konzepte mit 2 Druckversorgungen bzw. Druckversorgungseinrichtungen (DV) im Packaging schwierig mit kleinem Bauvolumen zu realisieren. Beispiele für Packaging sind aus EP 2744691 mit senkrechter Anordnung der Druckversorgung (DV) zur HZ-Achse und DE 2016032116160400 mit paralleler Anordnung der Druckversorgungseinrichtung zur HZ-Achse bekannt, welche eine geringere Baubreite erfordern. Ein einfacher Hauptbremszylinder erfordert in der Regel ein Bremssystem mit mehreren Redundanzen. Dies kann erreicht werden, wenn der Hauptbremszylinder beispielsweise mit redundanten und diagnostizierbaren Dichtungen ausgeführt wird, sowie weitere Redundanzen im Druckversorgung (z.B. Druckversorgung mit 2x3 Phasenanschluss, red. Bordnetzanschluss) vorgesehen sind sowie insbesondere weiteren Module zum Bremsen verwendet werden können (z.B. elektrische Parkbremse , elektrischer Antriebsmotor).

Aus DE102016105232 A1 ist ein Packaging mit kleinem Bauvolumen vorbekannt, bei dem eine integrierte redundante Druckversorgung bestehend aus mindestens einer Druckversorgungseinrichtung, mit Ventilen, insbesondere Magnetventilen zusammengefasst in einer Hydraulikunit, mit mindestens einer elektronischen Steuer- und Regeleinheit, mindestens einem Vorratsbehälter, und einem Hauptbremszylinder in einem Modul zusammengefasst ist.

DE 10 2013 224783 A1 und DE 10 2015 103860 A1 können auch noch als Stand der Technik zitiert werden.

### Aufgabe der Erfindung

Aufgabe der vorliegenden Erfindung ist es, eine sehr kostengünstige, kurz und schmal bauende 1-Box-Lösung für automatisiertes Fahren der Stufe 2 bis 3 zu schaffen, die zudem modular ist für andere darauf aufbauende Lösungen mit späterer Integration einer zweiten Druckversorgung.

### Vorteile der Erfindung

Diese Aufgabe wird mit einem Verfahren Systemmit den Merkmalen des Anspruchs oder des Anspruchs 2 gelöst. Vorteilhafte Ausgestaltungen des Verfahrens nach Anspruch 1 oder 2 ergeben sich durch die Merkmale der Unteransprüche.

Es wird ein Packaging mit kleinem Bauvolumen vorgeschlagen mit integrierter Druckversorgung bestehend aus einer Druckversorgungseinrichtung, mit Ventilen, insbesondere Magnetventilen zusammengefasst in einer Hydraulikunit, mit mindestens einer elektronischen Steuer- und Regeleinheit, mindestens einem Vorratsbehälter, mit einem Single-Hauptbremszylinder und Pedalhubsensoren und Wegsimulator mit Kolben. Dabei sieht die Erfindung verschiedenen Varianten modular aufgebauter Betätigungssysteme für Bremssysteme vor, welche möglichst viele Gleichteile für Fertigung und Montage enthalten. Mögliche erfindungsgemäße Varianten sind vorzugsweise:

### Variante a:

Eine 1-Box Lösung mit nur einem Modul ist, welches eine Druckversorgungseinrichtung, die Ventilanordnung (HCU), Steuer- und Regeleinheit (ECU) und Vorratsbehälter (VB) umfasst,

### Variante b:

Eine 1-Box Lösung mit nur einem Modul ist, welches die Druckversorgungseinrichtung aufweist, wobei mindestens eine Druckversorgungseinrichtung redundant, d.h. z.B. mit einem doppelten Bordnetzanschluss oder redundanten Phasenwicklungen ausgebildet ist und bei der die Ventilanordnung (HCU), Steuer- und Regeleinheit (ECU) und Vorratsbehälter (VB) ebenfalls im Modul enthalten sind.

### Variante c:

Gleiches Modul wie bei Variante c. jedoch mit einer Steuer- und Regeleinheit welche voll oder teilredundanter ausgebildet ist.

### Variante d:

Nutzung eines elektrischen Antriebsmotors und/oder einer elektrische Parkbremse für die Bremsung, insbesondere bei Ausfall von Modulen/Subsystemen.

Hierbei werden vorteilhaft die nachfolgend beschriebenen Gehäuse verwendet. Diese Gehäuse bilden Baugruppen, die zusammengebaut das gesamte Aggregat zum Einbau in das Fahrzeug bilden:
Gehäuse A: Umfasst die Ventilanordnung (HCU) für die Druckversorgungseinrichtung DV1 mit z.B. Ventilen (V), Magnetventilen (MV) und einem oder mehreren Druckgebern (DG).
Gehäuse B: Umfasst die Steuer- und Regeleinheit ECU ohne Redundanz mit einem Hauptstecker oder mit Teil- oder Vollredundanz mit zwei Steckern zum Bordnetz.
Gehäuse C: Für HZ mit Pedalhubsensoren und kleiner Sensor-ECU und Vorratsbehälter VB für die Variante e. Der HZ beinhaltet auch das Pedalinterface (PI) zum Bremspedal und auch Wegsimulator mit Kolben und Feder.

Das Gehäuse A (HCU) wird vorzugsweise aus fließgepresstem Formstück gefertigt, das sich sehr gut eignet zur Befestigung und Montage mit Verstemmtechnik. Hier soll die DV1 mit Kolbenantrieb und KGT zum Motor integriert werden, außerdem die Ventile und Magnetventile. Auch ist das Interface zur Steuer- und Regeleinheit ECU ähnlich zu ABS/ESP. Der Hauptbremszylinder HZ mit allen vorgenannten Komponenten (Gehäuse C) kann an Gehäuse A angeschraubt werden - dies gilt für alle Varianten außer für die Varianten e und f. Hier wird das Gehäuse C als Baugruppe separat vom Aggregat an die Stirnwand montiert und die Hydraulikleitung vom Hauptbremszylinder HZ an das Gehäuse A angeschlossen. Bei den Varianten a. und d. sitzt der Vorratsbehälter VB im Gehäuse A mit zwei Anschlüssen an die Bremskreise oder mit zusätzlichem Anschluss zur Druckversorgung DV. Der Schwimmer im Vorratsbehälter VB enthält ein Target mit Verbindung zum Sensorelement in der Steuer- und Regeleinheit ECU. Der Motor kann vorzugsweise über ein Zwischengehäuse, welches vorzugsweise aus Kunststoff ist, mit dem Gehäuse A verbunden werden. Der für die Kommutierung des Motors und Kolbenposition notwendige Sensor kann vorzugsweise in der Motorachse auf der zum Kolben gegenüberliegenden Seite am Motorgehäuse angebracht und mit der Steuer- und Regeleinheit ECU verbunden werden. Hierbei sitzt der Sensor in einem Zusatzgehäuse zur ECU. Als Redundanz zum elektrischen Anschluss der Magnetspule des Magnetventils kann zur Hauptleiterplatte PCB zusätzliche kleine Leiterplatte eingesetzt werden, für einen zweiten Anschluss der Magnetspule.

Das dargestellte Packaging erfüllt die Anforderungen für Modularität und kleinem Bauvolumen und ist auch sehr günstig in Kosten und Gewicht.

Durch das Vorsehen eines speziellen Sensorgehäuses ist es möglich, die fertigungsbedingten Toleranzen der Gehäuse der erfindungsgemäßen Einheit einfach auszugleichen, so dass der Motorsensor sicher an der für ihn vorgesehen Position platziert werden.

Zudem kann durch eine spezielle Ausgestaltung des Vorratsbehälters dessen Einfüllstutzen bzw. -öffnung vorteilhaft an oder vor der Vorderseite des Gehäuses der elektronischen Steuereinheit bzw. der Betätigungsvorrichtung angeordnet werden, so dass sie gut erreichbar ist. Durch die seitlich am Gehäuse der elektronischen Steuereinheit vorbeiführende Verbindung des vorderen Einfüllstutzens hin zur Rückseite des Gehäuses der Steuereinheit kann der eigentlich Vorratsbehälter sinnvollerweise hinter der Steuereinheit angeordnet werden. Der seitliche bzw. mittlere Bereich des Vorratsbehälters kann vorteilhaft schmal ausgebildet werden, so dass die Betätigungsvorrichtung hierdurch nicht oder nur unwesentlich breiter baut als bei einem herkömmlichen Vorratsbehälter.

Jeder Radbremse ist ein Schaltventil zugeordnet. Sofern keine zusätzlichen Auslassventile vorgesehen sind, so muss für eine Druckänderung in der jeweiligen Radbremse das zugehörige Schaltventil geöffnet werden, wobei die Druckversorgungseinrichtung durch entsprechende Bewegung ihres Kolbens den Druck auf- oder abbaut. Sobald der Druck in der Radbremse eingeregelt ist, wird das zugehörige Schaltventil wieder geschlossen und es kann in einer anderen Radbremse eine Druckänderung vorgenommen werden.

Durch Vorsehen mindestens eines Auslassventils für mindestens eine Radbremse oder einen Bremskreis, ist es möglich, mit nur einer Druckversorgungseinrichtung eine hochdynamische ESP- und/oder ABS-Funktion bereitzustellen, wobei über die den Radbremsen zugeordneten Schaltventile der Druck aufgebaut wird. Über das einer Radbremse zugeordnete Auslassventil kann dann bei geschlossenem Schaltventil der Radbremse der Druck unmittelbar in den Vorratsbehälter abgebaut werden, wobei gleichzeitig mit der Druckversorgungseinrichtung eine Druckänderung in einer anderen Radbremse oder dem anderen Bremskreis vornehmbar ist.

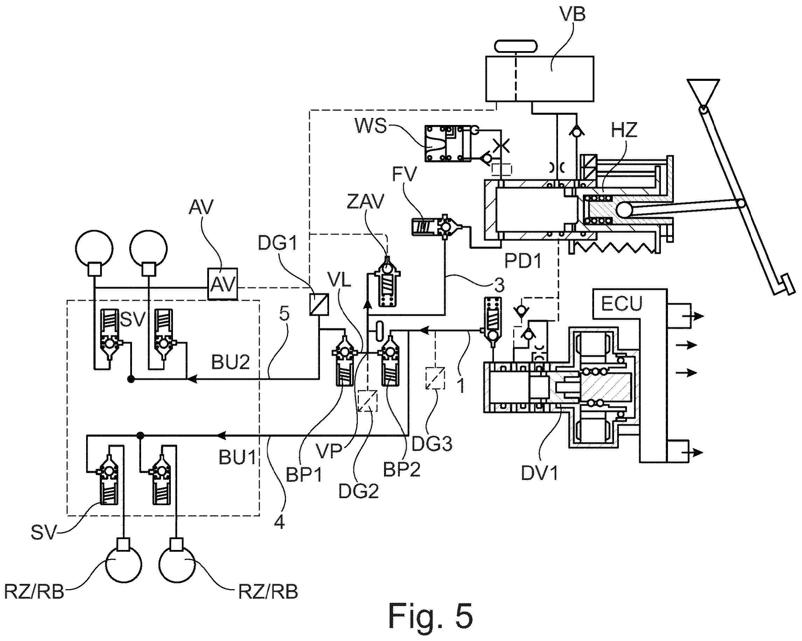

Auslassventile sollten insbesondere an hydraulischen Verbrauchern mit großen Volumen (z.B. an Radbremsen der Vorderachse) bzw. an zentraler Stelle zwischen Trennventilen, die Bremskreiskreise trennen (Fig. 5) vorgesehen werden. Je nach Bremskreisgestaltung (diagonal oder schwarz-weiss) sind die Auslassventile an unterschiedlichen Stellen im Hydraulikkonzept angeordnet.

Im Bremskraftverstärkungsbetrieb sowie im Rekuperationsbetrieb wird Druck auf- und abgebaut über die Druckversorgung durch Vor- und Rückbewegung des Kolbens, die Auslassventile werden hier geschlossen betrieben. Im Regelbetrieb, z.B. bei ABS, wird primär das Multiplexverfahren nach DE 102005055751 und DE 102009008944 A1 eingesetzt, nur bei extremen Dynamikanforderungen, wird das/die Auslassventile zum Druckabbau eingesetzt, wobei der Druckabbau vorzugsweise mit Unterstützung des Signals des Druckgebers erfolgt. Damit wird der Bremskreis nur in sehr wenigen Fällen zum Vorratsbehälter geöffnet, was entscheidende Vorteile bei der Zuverlässigkeit hat. Zudem werden die Schaltventile derart angeordnet ist, dass ein in einer Radbremse (RB) vorhandener Druck das Ventilstellglied des Schaltventils (SV) von dessen Ventilsitz weg kraftbeaufschlagt.

Wird zusätzliches Volumen für die Druckversorgung benötigt, wird Volumen aus dem Vorratsbehälter bei geschlossenen Trennventil der Druckversorgung zum Bremskreis nachgefördert.

Nachfolgend werden verschiedene Varianten anhand von Zeichnungen näher erläutert.

Es zeigen:
- Fig. 1:: Seitenansicht einer erfindungsgemäßen integrierten Einheit mit den Gehäusen A, B, C und Vorratsbehälter VB und Pedalinterface (PI);
- Fig. 1a:: eine Querschnittsdarstellung durch das Motorgehäuse, der elektronischen Steuereinheit sowie des Sensorgehäuses;
- Fig. 1b:: platzsparende schematische Ausgestaltung eines Vorratsbehälters;
- Fig. 1c:: Vorratsbehälter gemäß Figur 7 mit schematisch dargestelltem Gehäuse der elektronischen Steuereinheit sowie dem Gehäuse für die Ventilanordnung;
- Fig. 2:: eine alternative Ausführungsform zu der Ausbildung des 1-Box-Moduls gemäß Figur 1;
- Fig. 2a:: Vorderansicht des in Figur 2 dargestellten Moduls;
- Fig. 3:: Schnitt durch den Hauptbremszylinder HZ, Wegsimulator WS und PI;
- Fig. 4:: Darstellung der Pedalhubsensoren;
- Fig. 5: Eine mögliche Ausführungsform eines erfindungsgemäßen Hydrauliksystems mit einer fehlersicheren Ventilanordnung zur Verbindung beider Bremskreise, einem Hauptzylinder mit Betätigungseinrichtung sowie mit nur einer Druckversorgungseinrichtungen mit elektronischer Steuer- und Regeleinrichtung als sogenannte Integrierte 1-Box-Anlage;
- Fig. 6:: Hydrauliksystem mit nur einer Druckversorgung, die jedoch eine redundante Motorsteuerung aufweist;
- Fig. 6a:: Hydrauliksystem gemäß Figur 6, jedoch mit einer Druckversorgungseinrichtung mit Doppelhubkolben;
- Fig. 7:: eine schematische Darstellung einer möglichen Ausführungsform eines Bremssystems mit Radbremsen an der Vorderachse und Hinterachse, wobei ein elektrischer Antriebsmotor die Hinterachse antreibt;
- Fig. 8-10:: weitere Varianten möglicher Bremssysteme;
- Fig. 11a:: Schwarz-weiß-Anordnung der Auslassventile;
- Fig. 11b:: diagonale Anordnung der Auslassventile.

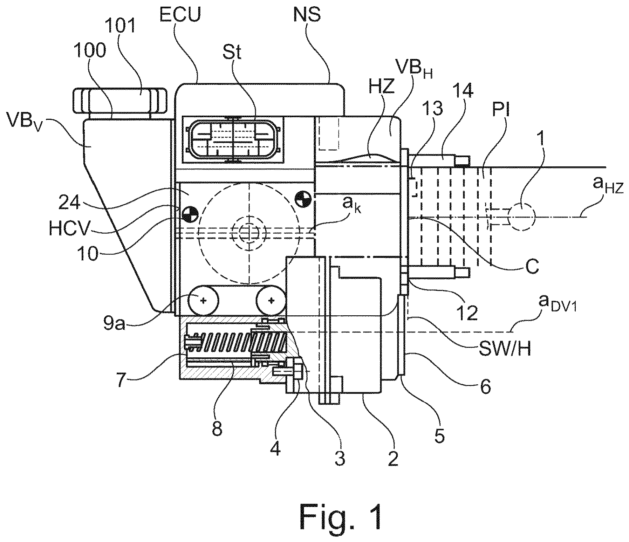

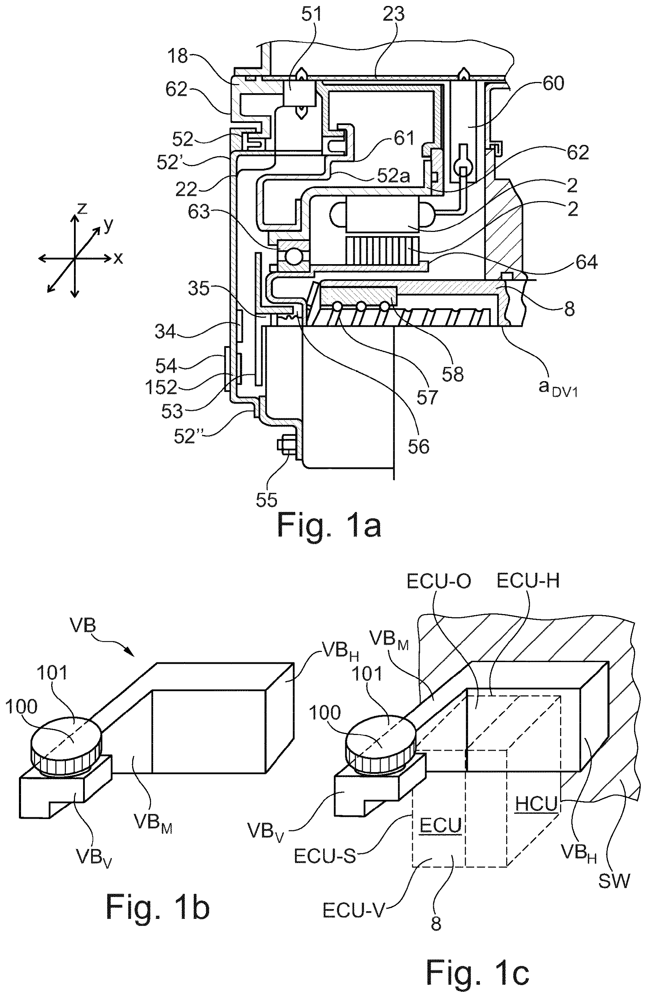

Fig. 1 zeigt die Seitenansicht der integrierten Einheit Gehäuse A mit Ventilanordnung HCU, welcher die Komponenten MV, Druckgeber DG, Kolben für DV1 und Befestigung des Motors von DV1 enthält. Die Komponenten wie z.B. Ventile, Magnetventil MV, Druckgeber DG sind vorzugsweise an einem Fließ- oder Strang gepressten Block 24 befestigt z.B. die MV vorzugsweise durch Verstemmen oder Clinchen, was auch dessen Abdichtung beinhaltet. Im unteren Teil ist der Kolben 8 der Druckversorgungseinheit DV1 mit Rückstellfeder und Gehäusedeckel 7 gezeigt, der z.B. vorzugsweise von nicht dargestellter Spindel und Kugelgewindetrieb KGT über den Motor 2 angetrieben wird. Dieser ist bei Gehäuse A über ein Zwischengehäuse 3 mit Befestigungsschrauben am HCU Block 24 angeschraubt. Der Vorratsbehälter VB2 ist mit zwei Anschlüssen 9a und 9b mit den Bremskreisen 1 und 2 verbunden. In Verlängerung von 9c ist im Gehäuse das Saugventil SV für die Druckversorgung DV platziert.

Der Vorratsbehälter VB weist einen Einfüllstutzen VB_{V} mit einer mittels Deckel 101 verschließbaren Einfüllöffnung 100 auf, der sich vor das Gehäuse der ECU erstreckt, wobei sich seitlich am Gehäuse der ECU ein mittlerer Bereich VB_{M} nach hinten zur Rückseite der Einheit erstreckt und in einem hinteren Bereich des Vorratsbehälters VB_{H} mündet, so dass Hydraulikmedium vom Einfüllstutzen VB_{V} in den hinteren Bereich VBH gelangen kann.

Auf der gegenüberliegenden Seite ist das Sensorgehäuse 3 mit Drehwinkelsensor sowohl mit Motor 2 als auch ECU 18 über eine nicht dargestellte vorzugsweise flexible Leiterplatte mit dem Zwischengehäuse verbunden. Auf der Oberseite der Steuer- und Regeleinheit ECU sind die Stecker angebracht, die bei der redundanten ECU 2-fach ausgeführt sind. Bei der Variante mit separatem Hauptbremszylinder HZ ist mit 11 die entsprechende Verbindungsleitung zum Hauptbremszylinder HZ vorgesehen. Der Vorratsbehälter VB kann wie üblich einen Niveausensor (NS) mit Schwimmer beinhalten, wobei das Target mit Sensorelement in der Steuer- und Regeleinheit ECU angeordnet sind, welche vorzugsweise bei Level 4 und 5 redundant ausgeführt ist. Hinter dem Ventilanordnungsblock HCU ist in der vollintegrierten Version der Hauptbremszylinder HZ angeordnet, der mit Befestigungsschrauben 13 am HCU-Block 24 angeschraubt ist.

Eine wichtige Komponente eines elektrischen Motorantriebes ist der Motorsensor 34 für die elektronische Kommutierung und Steuerung der Position des Kolbens. Der Motor kann mit verschiedenen Antriebsarten, z.B. Getriebe, Trapez oder Spindel 57 mit Kugelgewindetrieb 58, wie in Fig. 1a gezeigt, kombiniert werden.

So können verschiedene Sensortypen, wie z.B. Segmentsensoren mit induktiven oder auch magnetfeldempfindlichen Sensoren, zum Einsatz kommen oder aber Sensoren, welche in der Motor- oder Getriebeachse angeordnet sind. Diese Sensoren sind besonders einfach im Aufbau, und setzen sich aus einem Sensortarget, z.B. in Form eines zwei- oder mehrpoliger Magneten, und einem magnetfeldempfindlichen Sensorelement, z.B. in Form eines Hallsensors, GMR-Sensors, o.ä. zusammen. Dieses Sensorelement 34 ist elektrisch mit der elektronischen Steuereinheit ECU verbunden, welche entweder unmittelbar oder über ein Zwischengehäuse an den Motor angebaut ist. Das Sensorelement 34 ist vorzugsweise in einem Sensorgehäuse bestehend aus einem äußeren Gehäuseteil 52 und einem inneren Gehäuseteil 52a zusammen und nimmt u.a. eine Leiterplatte 22 auf, auf der das Sensorelement 34 angeordnet sein kann.

Um die verschiedenen Einbautoleranzen zwischen Gehäuse 18 der elektronischen Steuereinheit ECU, dem Motorgehäuse 62 und gegebenenfalls noch eines nicht dargestellten Zwischengehäuse und dem Sensorgehäuse 52/52a zu beherrschen, ist erfindungsgemäß ein elastisches Teil 61. Im Extremfall müssen dabei Toleranzen in allen drei Richtungen x, y, z ausgeglichen werden. Dies wird erfindungsgemäß durch einen entsprechenden Aufbau und Befestigung des Sensorgehäuses an dem Gehäuse 18 der elektronischen Steuereinheit ECU und an dem Motorgehäuse. Dabei ist das Sensorgehäuse vorteilhaft zweiteilig in ein äußeres Gehäuse 52 und ein inneres Gehäuse 52a unterteilt, wobei die Gehäuseteile 52, 52a über übliche Verbindungstechniken wie z.B. Schweißen oder Kleben miteinander verbunden und vorzugsweise aus Kunststoff gefertigt sind. Das Sensorgehäuse ist zudem am Motorgehäuse 62 befestigt, vorzugsweise an zwei Stellen. Die Sensorleiterplatte 22 ist im oberen Teil zur Steckerleiste flexibel, um die oben genannten Toleranzen zu beherrschen. Dazu eignet sich z.B. ein Flex-PCB (flexible Leiterplatte). Die elektrische Verbindung 22a von dieser flexiblen Leiterplatte 22 zur Hauptleiterplatte 23 der elektronischen Steuereinheit ECU erfolgt vorzugsweise über die besonders fehlersichere Steckerleiste 51 mit Einpresskontakten. Zur Montage mit der Hauptleiterplatte 23 besitzt das Gehäuse 18 der elektronischen Steuereinheit ECU eine Aussparung mit Deckel.

Das Sensorgehäuse 52, 52a ist mit einem Vorsprung des ECU-Gehäuses 18 verbunden und daran fixiert. Dazwischen liegt ein elastisches Teil 61, welches z.B. eine flexible elastische Dichtung oder ein Dichtungsbalg sein kann. Vorzugsweise ist das elastische Teil als Lippendichtung ausgebildet ist. Diese flexible und elastische Dichtung 61 dient somit zum 3-achsigen Toleranzausgleich. Die elektrische Verbindung von der Motorwicklung zur Leiterplatte 23 erfolgt über eine übliche Steckkontaktierung.

Diese in Figur 1a dargestellte Sensoranordnung ermöglicht zusätzlich noch die Messung der Rotorexzentrizität, welche auf die Spindel wirkt und Querkräfte an dem Kolben 8 erzeugt. Zur Messung der Rotorexzentrizität dient ein auf dem Rotor oder der Spindelmutter 56 angeordnetes Vermessungsmittel 53, das im einfachsten Fall ein Messflansch oder eine Scheibe ist. Die Rotorexzentrizität wirkt sich auch in axialer Richtung aus und kann mit Lasertechnik gemessen werden. Hierzu besitzt das äußere Sensorgehäuseteil 52a eine Öffnung 152 in seinem unteren Bereich 52", die nach der Messung mit einem Verschlussstopfen 54 geschlossen wird. Die Oberfläche des Vermessungsmittels 53 kann auf seiner dem äußeren Sensorgehäuseteil 52 zugewandten Seite für die Messung Markierungen aufweisen, mit einer Beschichtung versehen und/oder profiliert sein. Der untere Bereich 52" ist mittels einer Befestigungsschraube 55 an dem Motorgehäuse 62 befestigt.

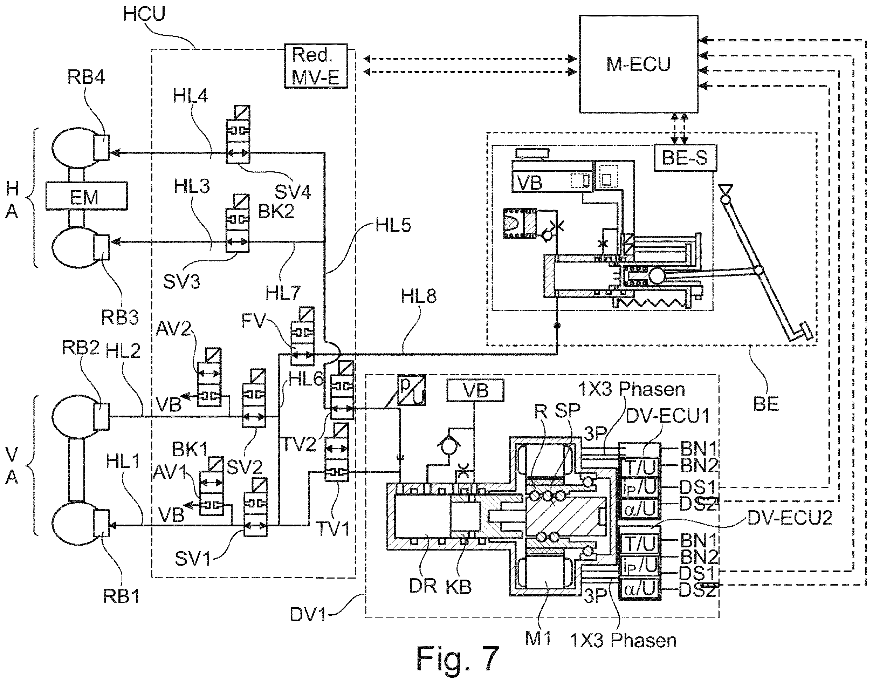

Die Figur 1b zeigt eine platzsparende schematische Ausgestaltung eines Vorratsbehälters VB, der einen vorderen Bereich VB_{V}, einen mittleren Bereich VBM sowie einen hinteren Bereich VB_{H} aufweist. Der vordere Bereich VB_{V} weist eine obere Einfüllöffnung 100 auf, die mit dem Deckel 101 verschließbar ist. Wie in Figur 1c dargestellt, umgreift der Vorratsbehälter VB das Gehäuse B der elektronischen Steuereinheit ECU an drei Seiten, nämlich dessen Vorderseite ECU-V, dessen seitliche Wandung ECU-S sowie dessen Rück- bzw. Hinterseite ECU-H. Die Rückseite ECU-H ist der Spritzschutzwand SW zugewandt. Je nach Ausbildung der Einheit kann der Vorratsbehälter VB, wie in Figur 7a dargestellt, auch an der Rückwand des Gehäuses der Ventilanordnung HCU anliegen bzw. diese Hintergreifen.

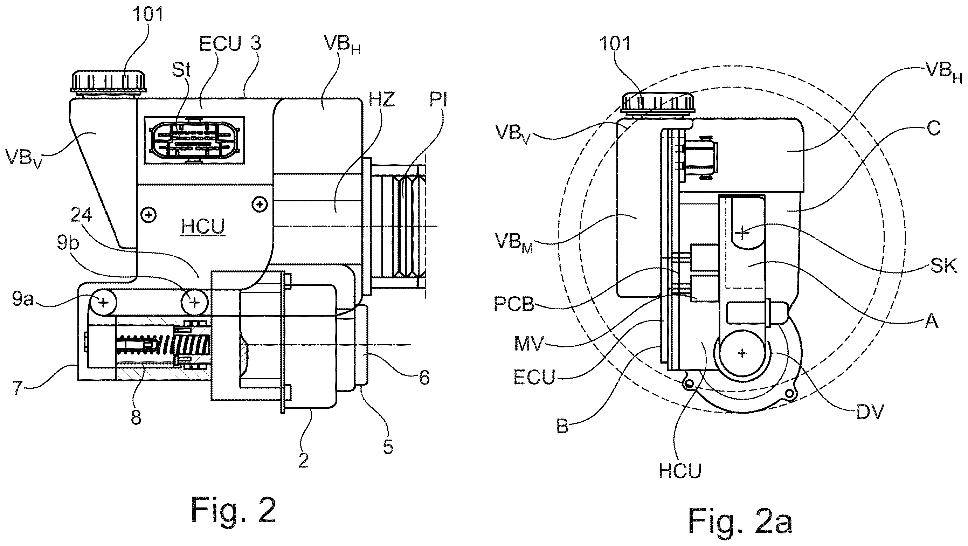

Figur 2 zeigt eine etwas abgewandelte Ausführungsform gegenüber der in Figur 1 dargestellten Einheit.

Figur 2a zeigt die Ansicht von vorn. Hier wird gezeigt, dass die Umrißkontur noch innerhalb des kleinen Vakuum Vak. von 8" untergebracht werden kann und somit für den Einbau an der Spritzwand geeignet ist. Der große Vorteil liegt in der Baubreite von ca. 50 % von o.g. BKV, was für Rechts- und Linkslenker sehr günstig ist. Auch die Baulänge zu o.g. BKV ist erheblich kürzer, und bildet somit eine Basis für eine breite Anwendung des erfindungsgemäßen Modularkonzeptes. Hier sind auch wieder die verschiedenen Gehäuse A, B, C und VB vorzusehen. Gehäuse B liegt z.B. hinter dem HCU-Block 24 und wird mit diesem verschraubt und abgedichtet, wie bei ABS.

Vorteilhaft ist aus Kostengründen eine 1-teilige Leiterplatte PCB vorzusehen. Für den Fall des Eindringens von Wasser können die Leiterplatten PCB durch Stege mit Dichtung im Gehäuse der Steuer- und Regel ECU mit den beiden redundanten Schaltungen getrennt werden. Auch mögliche Leiterbahnrisse sind vorteilhaft durch Redundanzen abgedeckt bzw. ausgeschlossen. Wichtig sind auch die restlichen elektronischen Verbindungen von Motor zu Leiterplatte PCB.

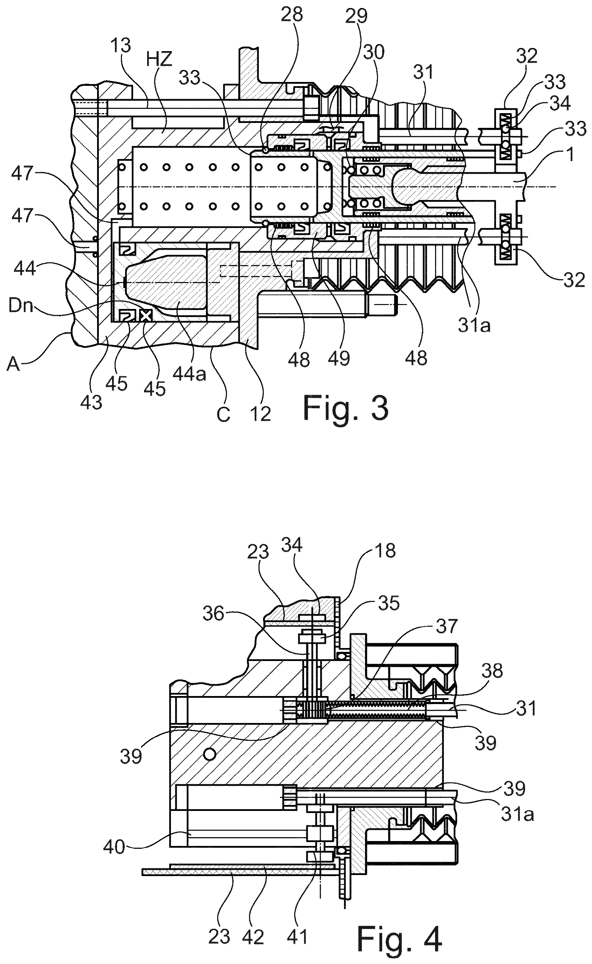

Fig. 3 zeigt den Hauptbremszylinder HZ mit Gehäuse, in dem der HZ-Kolben 33 und WS-Kolben mit Feder für die Gegenkraft und Pedalcharakteristik eingebaut ist. Der Wegsimulatorkolben kann auch im Block A bzw. Gehäuse A untergebracht werden. Der Kolben besitzt ebenfalls redundante Dichtungen 45 mit Drossel Dr zum Innenraum. Bei Ausfall der Dichtung 45 wird über den Leckfluß der Ausfall erkannt und der Ausfall ist nicht relevant. Diese Drossel Dr mit kleinem Leckfluß erlaubt die Diagnose des Ausfalls der ersten Dichtung. Der Wegsimulator-Kolben stützt sich am Flansch 12 ab und benötigt deshalb kein getrenntes Verschlussstück. Parallel zum Wegsimulator-Kolben ist der HZ-Kolben 23 mit Rückstellfeder 50 angeordnet. Die Führung des Kolbens kann in Gleitringen 48 mit geringer Reibung erfolgen, auch wird hierbei die Dichtwirkung des Kolbens weniger beeinträchtigt. Vorzugsweise wird für die Gleitringe und Dichtungen ein getrenntes Lagerteil 49 verwendet, welches sich am Flansch abstützt und auch der Anschlag des Kolbens 23 mittels Anschlagring 28. Zur Diagnose des Wegsimulators WS kann im HZ-Kolben ein Kraft-Weg-Sensor KWS 30 angeordnet werden. Mit dem Kolben 23 und dem Pedalstößel sind die Sensorstangen 31 und 31a verbunden. Diese Stangen sind mit einer Rastkupplung 32-34 verbunden, jeweils mit Kolben und Pedalstößel. Diese Kupplung besteht aus Kugel 34 mit Feder 33 im Gehäuse 22. Damit wird eine Blockierung des Pedalstößels beim Klemmen einer Sensorstange vermieden.

Fig. 4 zeigt die Anordnung von zwei alternativen Ausführungsmöglichkeiten der Pedalwegsensoren. Die erste Variante mit Zahnstange 38, Zahnrad 37, Antriebswelle 36 zum Target 35 und Sensorelement 34 auf PCB 23 wurde bereits in DE102015104246 beschrieben. Diese Version benötigt wenig Einbauraum und ist kostengünstig. Bei der unteren Variante ist ein Führungsteil 39 z.B. mit Zapfen in die Sensorstange eingepresst. Dieses wird im oberen Teil in einer Führungsleiste 40 geführt, damit eine Winkelverdrehung klein ist, was sich auf das Target 41 auswirkt. Dieses Target wirkt auf einen induktiven Sensor 42 mit Auswerteschaltung und ist mit der Haupt-PCB 23 verbunden und sitzt im ECU-Gehäuse 14.

Für die oben beschriebenen Varianten a bis f können folgende Komponenten vorteilhaft gleich ausgebildet sein:

| | |
|---|---|
| DV1: | für alle Varianten a bis f; |
| DV2: | für alle Varianten mit redundanter Druckversorgung; |
| HCU/ECU: | für die zwei Varianten ohne redundante Druckversorgung; |
| HZ und WS: | separat und integriert mit Pedalsensoren für fünf der sechs Varianten, mit Ausnahme von Variante f. ohne Hauptbremszylinder. Separater HZ jedoch mit zusätzlichem VB. |
| MV: | für alle Varianten |
| Motorsensor: | für alle Varianten. |

Bis auf das E-Pedal entsprechend System f. sind alle Komponenten modular. Damit hat der Hersteller und Anwender einen modularen Systembaukasten (OEM) eine hervorragende Basis, auch für Kostenminimierung.

Die Figur 5 zeigt die Grundelemente eines regelbaren Bremssystems bestehend aus Hauptbremszylinder HZ mit Wegsimulator WS und Vorratsbehältnis VB, einer Druckversorgungseinrichtungen DV1, wobei die Druckversorgungseinrichtung DV1 eine elektromotorischer Kolbensteuerung ist. Die Druckversorgungseinrichtung DV1 wirkt zusammen mit einer Ventilschaltung auf die Radbremszylinder RZ, welche den geregelten Raddruck, z. B. bei ABS, auf die Bremse übertragen. Dies entspricht dem Stand der Technik. Mittels der einen Druckversorgungseinrichtung DV1 kann über die beiden Verbindungsventile BP1 und BP2 in beiden Bremskreisen BK1 und BK2 der Druck eingeregelt werden.

Das erfindungsgemäße Verfahren zu einem Hydrauliksystem soll jedoch eine hohe Fehlersicherheit für halbautomatisches (HAD) oder vollautomatisches Fahren (FAD) aufweisen. Hierzu sollten alle ausfallrelevanten Komponenten berücksichtigt werden, wie z. B. Ventile, Sensoren, Dichtungen, Motoren, Bremskreise. Vorteilhaft sollten daher folgende Komponenten bzw. Hydraulikverbindungen ausfallsicher ausgebildet sein:
(1) Verbindung von der für den ersten Bremskreis vorgesehenen Druckversorgungseinrichtung DV1 zum zweiten Bremskreis BK2;
(2) Verbindung von dem Druckraum des Hauptbremszylinders HZ über das Ventil FV hin zu den Bremskreisen BK 1, BK2 über die Ventile BP1 und BP2;
(3) Verbindung von Ventil PD1 und Ventil BD1 zu den Radbremszylindern RZ über die jeweiligen den Radbremsen zugeordneten Schaltventile SV;
(4) Verbindung von Ventil BD2 zu den Radbremszylindern RZ über die jeweiligen den Radbremsen zugeordneten Schaltventile SV;
(5) Verbindung von einem Bremskreis BK1, BK2 hin zum Vorratsbehältnis VB;
(6) Verbindungen zwischen Bremskreisen BK1, BK2 hin zu den Radbremszylindern RZ.

Diese hydraulischen Verbindungen mit möglichen Ausfallfehlern der einzelnen Komponenten werden im Folgenden beschrieben.

Die Druckversorgungseinrichtung DV1 wirkt vom Bremskreis BK1 in den Bremskreis BK2 über die Hydraulikleitungen Leitung 1, 2 und 5 über die Schaltventile SV zu den Radbremsen RB. Im Stand der Technik wird hierzu lediglich ein einziges Bypassventil eingesetzt. Ein Ventilausfall kann hier einen Totalausfall der Bremse bewirken, wenn noch ein schlafender Fehler bei einem weiteren Ventil hinzukommt. Die Erfindung sieht daher zwei redundante Ventile BP1 und BP2 vor, um die Verbindung hin zum Bremskreis BK2 von der ersten Druckversorgungseinrichtung DV1 zu ermöglichen. Schlafende Fehler der Ventile BP1 und BP2 werden vom Druckgeber erkannt, indem bei Druckänderung die Ventile kurzgeschlossen werden. In dieser Phase muss der Druck konstant bleiben. Bei Ausfall der ersten Druckversorgungseinrichtung DV1, z.B. bei Ausfall einer Kolbendichtung, wird eine Rückwirkung auf Bremskreis BK2 über die drei redundanten Ventile BP1, BP2 und PD1 verhindert. Die Ventile sind vorzugsweise stromlos offene Ventile, damit bei Ausfall der Druckversorgungseinrichtung DV1 der Hauptbremszylinder HZ auf beide Bremskreise BK1 und BK2 wirken kann. Wird Druck über das Öffnen der Ventile ZAV oder FV reduziert, so öffnen die beiden Verbindungsschaltventile ohne eigene elektrische Ansteuerung durch den wirkenden Differenzdruck selbstständig.

Die Pedalbewegung wird über redundante Pedalwegsensoren (PS) gemessen, die zugleich auf ein KWS-Messelement nach WO2012/059175 A1 wirken. Mit dem Signal der Pedalwegsensoren wird die Druckversorgungseinrichtung DV1 angesteuert, wobei die Kolbensteuerung den Volumenfluss in der Hydraulikhauptleitung 1 in dem Bremskreis BK1 und über die redundanten BP1- und BP2-Ventile in den Bremskreis BK2 bewirkt. Über die Leitung 3 kann der Hauptbremszylinder HZ mit den Bremskreisen BK1 oder BK2 verbunden sein, wobei in der Leitung 3 das Ventil FV zum Verschließen derselben angeordnet ist. Diese Verbindung ist nur in der Rückfallebene wirksam. Sofern die Leitung mit der Verbindungsleitung der beiden Schaltventile BP1 und BP2 verbunden ist, bilden die beiden Ventile BP1 und BP2 eine weitere Redundanz. Eine übliche Verbindung vom FV direkt in einen der beiden Bremskreise BK1, BK2 hätte bei undichtem Ventil FV zur Folge, dass der Bremskreis und damit die Druckversorgung auf den HZ-Kolben wirkt, was herkömmlich zum Abschalten der Druckversorgung führt.

Auf das Ventil FV wirken verschiedene Drücke bzw. Druckniveaus vom Hauptbremszylinder und von den Bremskreisen BK1 und BK2. Dies kann dazu im schlimmsten Fall dazu führen, z.B. bei Ausfall des Bordnetzes oder der Steuer- und Regeleinheit ECU, dass eine ungünstige Druckdifferenz am geschlossenen Ventil FV herrscht und das Ventil FV nicht öffnen kann, so dass ein Druckabbau P_{ab} nicht möglich ist. Um dies zu verhindern kann dem Ventil FV ein weiteres Schaltventil parallelgeschaltet werden, wobei die Aus- und Eingange der Ventile vertauscht an die Leitung 3 angeschlossen sind, so dass bei beliebigen Druckdifferenzen sichergestellt ist, dass zumindest eines der beiden Ventile durch den Differenzdruck automatisch, d.h. auch ohne Bestromung öffnet. Zudem wird der Staudruck an den Ventilen hierdurch vorteilhaft verringert. Bei Ausfall bzw. Undichtigkeit des Ventils FV fällt der Wegsimulator WS nicht aus.

Bei Ausfall eines Bremskreises im Radzylinder wird herkömmlich das entsprechende Einlassventil EV oder Schaltventil SV geschlossen, damit wird der ausgefallene Radkreis eliminiert. Ein undichtes EV/SV (schlafender Fehler) bewirkt den Ausfall des Bremskreises oder der gesamten Druckversorgung. Auch hier ist durch die Ventile BP2 und BP1 eine zusätzliche Sicherheit gegeben, so dass die Druckversorgung nicht ausfällt. Ein Ausfall des Bremskreises BK1 aufgrund eines nicht funktionierenden Schaltventils SV bedeutet einen Ausfall der Druckversorgung DV1, wodurch die Druckversorgung aller noch funktionstüchtigen Radbremsen über die andere Druckversorgungseinrichtung DV2 erfolgt.

Der Druckaufbau erfolgt bei aktiver Druckversorgung immer über die Druckversorgung. Für die ABS-Regelung oder zur Druckreduzierung mit der Druckversorgungseinrichtung DV1 kann entweder die Druckversorgung oder das zentrale Auslassventil ZAV verwendet werden. Druckabbau erfolgt dann durch Rückfahren des Kolbens der Druckversorgung oder durch PWM-Betrieb des ZAV. Zur Verbesserung der Regelgüte beim Druckabbau über das ZAV-Ventil kann das Drucksignal des Druckgeber eingesetzt werden. Es ist jedoch ebenso möglich, alternativ oder ergänzend zum ZAV-Ventil für zumindest eine Radbremse ein Auslassventil AV vorzusehen, vorzugsweise wird das AV an den Radbremsen mit großem Volumen, d.h. Vorderradbremsen eingesetzt. So können statt einem Auslassventil auch zwei Auslassventile AV eingesetzt werden (nicht eingezeichnet). Auch kann wie in Standard-ABS-Systemen üblich für jeden Bremskreis, ein Auslassventil AV vorgesehen werden, so dass in diesem Bremskreis über das Auslassventil AV der Druck abgebaut wird und gleichzeitig der Druck mittels der Druckversorgungseinrichtung DV1 in dem anderen Bremskreis aufgebaut/abgebaut wird. Der Volumenfluss geht dabei zusätzlich über die Ventile BP1 oder BP2, so dass ein undichtes ZAV nicht kritisch für den Normalbetrieb ist, da bei Ausfall des zentralen Abführventils ZAV die Drucksteuerung über die Druckversorgungseinrichtung DV1 erfolgt. Außerdem wird der Fehler, auch schlafend, von ZAV gleich durch Druckänderung oder erhöhte Volumenförderung der Druckversorgungseinrichtung DV1 erkannt. Für extreme Sicherheitsanforderungen kann auch ein weiteres Abführventil zum Auslassventil ZAV in Reihe geschaltet werden.

Ausfallursachen im Hauptbremszylinder HZ und Wegsimulator WS sind normalerweise die Dichtungen. Beim Hauptbremszylinder HZ kann eine zusätzliche Dichtung D3 mit Drossel in der Rücklaufleitung zum Vorratsbehälter VB eingesetzt werden, um den Ausfall einer Dichtung frühzeitig diagnostizieren zu können. Damit ist eine Undichtheit über eine kleine zusätzliche Pedalbewegung über die Pedalhubsensoren erkennbar. Zu berücksichtigen ist die geringe Beanspruchung bei HAD und FAD.

Zur Diagnose der Dichtungen ist bei vielen Systemen in der Rücklaufleitung ein stromlos offenes Magnetventil eingeschaltet, welches zur Diagnose geschlossen wird. Hierbei wird von der Druckversorgungseinrichtung DV1 über die Ventile PD1, BP1 und EV Druck in den Hauptbremszylinder HZ geleitet. Die Diagnose erfolgt über Druckänderung bei konstanter Kolbenposition oder Änderung der Kolbenposition bei konstantem Druck. Als Alternative kann hier auch eine Kombination aus Drossel- und Rückschlagventil kostensparend eingesetzt werden. Die Drossel ist so bemessen, dass ein Leckfluss durch die Dichtung nur geringfügig zur Pedalverlängerung innerhalb einer normalen Bremszeit von ca. 10 sec. führt.

Dieselbe Lösung wird auch beim WS-Kolben mit redundanter Dichtung eingesetzt, Diagnose wie o. g. bei D3 über die Pedalbewegung. Hinzu kommt noch, dass eine Steuerung der Bremskraftverstärkung auch bei diesen ausgefallenen Dichtungen noch möglich ist, allerdings mit veränderter Pedalcharakteristik. Auch hier gilt eine extrem kleine Ausfallrate für den Ausfall von zwei Dichtungen fast im Bereich <10⁻¹⁰/Jahr. Auch die Druckversorgungseinrichtung DV1 kann mit redundanten Dichtungen, wie beim Hauptbremszylinder HZ zuvor beschrieben, ausgerüstet werden mit D6 mit Drossel zwischen D6 und D5. Wenn das Saugventil direkt mit dem Anschluss an PD1 verbunden wird, dann setzt das Ansaugen unmittelbar beim Rückhub des Kolbens ein, mit dem Vorteil, dass auch bei tiefen Temperaturen eine hohe Saugleistung gegeben ist. Ein Ausfall, Undichtheit des SV bewirkt im Grenzfall Ausfall der DV. Ein Kompromiss liegt in dem Anschluss des SV bei ca. 60 % des Hubes. Damit ist 40% des Hubes ohne Auswirkung eines undichten SV möglich und zugleich eine Saugwirkung im normalen Temperaturbereich. Mit kleiner o. g. Einschränkung ist durch Redundanz die Volumenförderung des Kolbens gesichert. Weiterhin kann der Motor über eine redundante 2x3-Phasen-Wicklung angesteuert werden, so dass die DV nur durch blockierendes KGT ausfallen.

Die ABS-Funktion über Multiplexbetrieb MUX und der Druckversorgungseinrichtung DV1 erfolgt wie in WO 2006/111393 A1 beschrieben. Erweiterte MUX-Funktionen ergeben sich durch ein zentrales Abführventil ZAV. Ist beim Druckaufbau p_{auf} im Bremskreis BK1 gleichzeitig ein Druckabbau p_{ab} im anderen Bremskreis BK2 notwendig, so erfolgt dieser über das Abführventil zentrale ZAV und gleichzeitig geschlossenem Ventil BP1. Dadurch ist das Multiplexsystem MUX nur durch zwei Radbremsen RB1, RB2 im Bremskreis BK1 belastet, d. h. es kann nicht zugleich ein Druckaufbau Pauf und Druckabbau Pab in den Radbremsen RB1 und RB2 des Bremskreises BK1 erfolgen. Alternativ kann auch ein Abführventil AV1, AV2 im jeweiligen Bremskreis zum Druckabbau p_{ab} zur Entlastung des MUX verwendet werden. Dabei kann das Abführventil AV entweder zwischen dem Schaltventil SV und einem Verbindungsschaltventil BP1, BP2 oder aber zwischen der Radbremse und dem zugehörigen Schaltventil SV angeordnet bzw. angeschlossen werden, so dass ein direkter Druckabbau Pab über das Abführventil hin zu einem Vorratsbehälter VB erfolgen kann. Dies ist insbesondere zum Druckabbau Pab in den Vorderrädern sinnvoll. Das zentrale Abführventil ZAV wird bei dieser Alternative nicht benötigt.

Typisch ist für den o. g. MUX-Betrieb die Druckregelung auch bei ABS über die Volumenmessung und über die Kolbenbewegung der Druckversorgungseinrichtung DV1, auch unter Berücksichtigung der Druck-Volumen-Kennlinie (p-V-Kennlinie). Somit ist auch eine Volumenzumessung für den Druckaufbau möglich. Vorteilhaft ist hier beim Druckaufbau p_{auf} ein serieller und nicht gleichzeitiger Druckaufbau p_{auf} in den einzelnen Radbremsen. Zu berücksichtigen ist dabei die Ventildimensionierung und der Staudruck am Ventil, insbesondere bei den Ventilen BP1 und BP2 bei schnellem Druckaufbau in den Radkreisen. Der Staudruck von o. g. Ventilen wirkt als Druckdifferenz zwischen den Bremskreisen BK1 und BK2.

Die Steuer- und Regeleinrichtung ECU ist Bestandteil des gesamten Systems und des Packagings. Für eine fehlersichere Funktion ist eine redundante oder teilredundante ECU notwendig. Diese teilredundante ECU kann auch für bestimmte Funktionen zusätzlich zur redundanten ECU verwendet werden. In jedem Fall sind bzw. sollten die Ventile redundant über getrennte Ventiltreiber und Trennschalter angetrieben, der einen ausgefallenen Ventiltreiber abschaltet.

Zur Redundanz der Steuer- und Regeleinrichtung ECU ist auch ein redundantes Bordnetzanschluss notwendig. Auch kann ein Anschluss mit 48V für den Anschluss der Motoren verwendet werden. Vorteil bei 48V ist eine höhere Dynamik. Bei Ausfall des Motors von der Druckversorgungseinrichtung DV1 bei 48V ist Notbetrieb mit 12V mit ca. 50% Leistung gegeben mit red. Dynamik und Kostenersparnis. Hierzu ist eine Auslegung des Motors auf z.B. 24V notwendig.

Vorzugsweise wird im Bremskreis BK2 ein Druckgeber DG, ggf. auch in BK1 eingesetzt. Bei Ausfall des Druckgebers kann eine Druckregelung über die Strommessung der Motoren und Positionssteuerung des Kolbens über die p-v-Kennlinie erfolgen.

Der Druckgeber DG1 kann wie in der Figur 5 dargestellt angeordnet werden. Alternativ kann er jedoch auch durch einen der beiden gestrichelt dargestellten Druckgeber DG2, DG3 ersetzt oder ergänzt werden. Vorteilhaft sollte der Druckgeber DG2 verwendet werden, um den Druck in der Verbindungsleitung VL zu messen. Hierdurch kann vorteilhaft beim Druckabbau P_{ab} im Bremskreis BK2 der Druck über das Auslassventil AV und den Druckgeber DG2 gesteuert werden, wenn die Druckversorgungseinrichtung DV1 im Bremskreis BK1 z.B. mittels Multiplexverfahren die Druckregelung betreibt.

Sofern zwei Druckversorgungseinrichtungen DV1 und DV2 verwendet werden, so kann im Bremskreis BK2 über den Druckgeber DG2 und die zweite Druckversorgungseinrichtung DV2, welche direkt mit der Leitung 5 in Verbindung ist, die Druckänderung gesteuert werden, sofern die beiden Verbindungsventile BP1 und BP2 geschlossen sind. Die Druckversorgungseinrichtung DV1 steuert dann z.B. über Volumen- und Strommessung. Eine Kalibrierung kann z.B. immer dann erfolgen, wenn die Druckversorgungseinrichtung DV1 die Druckänderung in beiden Bremskreisen BK1 und BK2 betreibt.

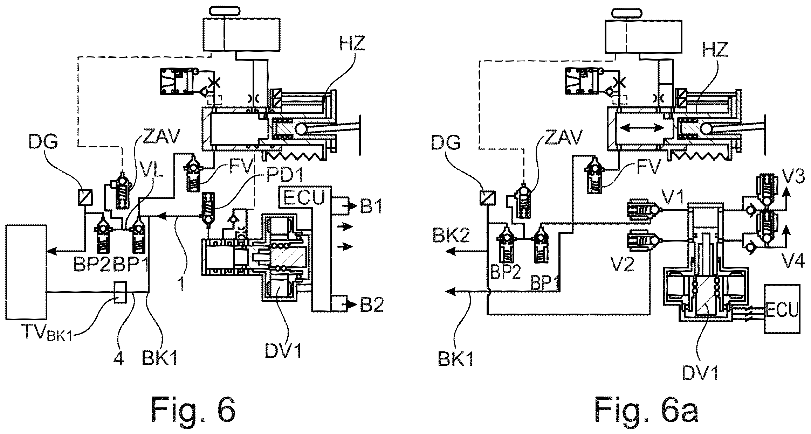

Die in den Figuren 6 und 6a dargestellten Ausführungsformen sind leicht gegenüber der in Figur 5 dargestellten Ausführungsform abgewandelt.

So ist bei der Ausführungsform gemäß Figur 6 in der Leitung 4 ein Trennventil TVBK1 angeordnet, damit der Bremskreis separat noch einmal der Druckversorgung DV1 getrennt werden kann.

Fig. 6a zeigt die Anwendung eines 2-kreisigen Doppelhubkolbens, dessen Vorhub über V1 den BK1 speist und der Rückhub über V2 den BK2. Beide Kreise des DHK können über die BP1 und BP2 in den jeweils anderen Bremskreis BK einspeisen. Zum Pab muss das Volumen des DHK, wie aus WO2016/023994 A1und WO2016/023995 A1 bekannt, über die Ventile V3 und V4 in der Vorratsbehälter VB abgeführt werden.

Die Figur 7 zeigt eine schematische Darstellung einer möglichen Ausführungsform eines Bremssystems mit Radbremsen RB1 und RB2 an der Vorderachse VA und den Radbremsen RB3 und RB4 an der Hinterachse, wobei ein elektrischer Antriebsmotor EM zum Antrieb der Hinterachse HA vorgesehen ist.

Das Bremssystem hat lediglich eine einzige Druckversorgungseinrichtung DV1, eine Betätigungseinrichtung BE, eine übergeordneten Steuer- und Regeleinheit M-ECU. Die Druckversorgungseinrichtung DV1 verfügt über zwei voneinander unabhängige Steuer- und Regeleinheiten DV-ECU1 und DV-ECU2, die jeweils die Ansteuerung von jeweils einem der beiden Wicklungs- bzw. Phasensysteme des Antriebsmotors der Druckversorgungseinrichtung DV1, welche hier durch 3-Phasensysteme gebildet sind, ansteuern. Zusätzlich können redundante Signalleitungen DS1 und DS2 vorgesehen werden.

Schaltventile zum Verbinden bzw. Trennen der Druckversorgungseinrichtung DV1 mit den Radbremsen sind vorgesehen sind. Die gestrichelten Linien stellen Signalübertragungsleitungen dar, welche die Steuereinheit M-ECU mit den Komponenten des Bremssystems verbinden.

Der Traktionsmotor EM kommuniziert mit der Steuereinheit M-ECU und kann zum Antrieb als auch zum Abbremsen der Hinterachse VA eingesetzt werden kann.

Zum Druckaufbau in den hydraulisch wirkenden Radbremsen RB1-RB4 dient eine Druckversorgungseinrichtung DV1, die einen elektromotorischen Antrieb M1 aufweist, welcher von der Steuer- und Regeleinrichtung DV-ECU gesteuert wird. Zusätzlich kann die Druckversorgungseinrichtung DV1 noch über ein Motorstrom-Meßeinrichtung i/U, mindestens einen Temperatursensor T/U sowie eine Rotor-Winkelgeber · /U aufweisen, deren Signale zur Druckregelung verwendet werden können. Der Motor M1 treibt über einen Spindeltrieb einen Kolben KB, welcher in einem Zylinder der Druckversorgungseinrichtung DV1 verschieblich gelagert ist und einen Druckraum begrenzt, an, um dort einen Druck aufzubauen, zu halten oder abzubauen. Der Druckraum ist über eine Hydraulikleitung mit den Trennventilen TV1, TV2 in Verbindung. Durch die beiden der Druckversorgung DV1 vorgeschalten Trennventile wirkt sich ein Bremskreisausfall nicht auf den Totalausfall der Bremsanlage aus. Bei Ausfall des Bremskreises BK1, kann immer noch im BK2 mittels der Druckversorgung und den Elektromotor EM Bremskraft erzeugt werden. Fällt Bremskreis BK2 aus, kann im Bremskreis BK1 (Vorderachse) mittels der Betätigungseinheit durch den Fahrer oder der Druckversorgung DV1 Bremskraft erzeugt werden. Damit können die gesetzlichen Anforderungen der Mindestverzögerung auch bei Bremskreisausfall erreicht werden. Da die Druckversorgung zudem redundant ausgeführt ist, kann eine hohe Verfügbarkeit erreicht werden. Restrisiko liegt beim Klemmen des Spindeltrieb, was durch entsprechend Qualitätsmaßnahmen abgesichert werden muss. Mittels des Druckgebers p/U kann der Druck in der Hydraulikleitung ermittelt werden. Die Druckregelung kann entweder unter Zuhilfenahme des Druckgebers p/U erfolgen. Die Druckregelung kann aber auch über die Strommessung mittels der Motorstrom-Meßeinrichtung i/U sowie dem Winkelgeber · /U und einer abgespeicherten Druck-Volumen-Kennlinie erfolgen, da das Motormoment proportional zum Druck im Druckraum und auch proportional zum Motorstrom i ist. Der Motor M1 verfügt über zwei voneinander getrennte Wicklungssysteme mit 2x3-Phasen. Selbstverständlich kann die Zahl der Phasen den jeweiligen Anforderungen nach geändert werden. Bei Ausfall eines Wicklungssystems kann der Motor M1 noch mit verminderter Leistung betrieben werden. Hierdurch ist bereits eine wesentliche Redundanz geschaffen. Die Steuer- und Regeleinrichtung DV-ECU kann ebenfalls redundant ausgebildet werden, so dass z.B. jeweils eine eigenständige Steuer- und Regeleinrichtung DV-ECU1 und DV-ECU2 vorgesehen sein kann, welche jeweils ein Phasensystem des Motors M1 ansteuert. Somit kann auch bei Ausfall einer Steuer- und Regeleinrichtung DV-ECU1 bzw. DV-ECU2 das Bremssystem noch sicher betrieben werden.

Mittels der Trennventile TV1, TV2 kann die Druckversorgungseinrichtung DV1 wahlweise mit der Hydraulikleitung HL6 bzw. dem ersten Bremskreis BK1 verbunden bzw. von dieser getrennt werden. Mittels Schaltventilen SV1 und SV2 sind die Hydraulikleitungen HL1 und HL2, welche mit den Radbremsen verbunden sind, wahlweise mit der Hydraulikleitung HL6 verbindbar. Soll nun ein Druck in der Radbremse RB1 der Vorderachse VA aufgebaut werden, so erfolgt dies über geöffnete Ventile TV und SV1 wobei die Ventile AV1, SV2 und FV geschlossen sind und der Kolben KB mittels des Motors M1 verstellt wird. Zum Druckabbau in der Radbremse RB1 kann der Kolben KB bei gleicher Ventilschaltung zurückgefahren werden oder aber das Auslassventil AV1 wird geöffnet, wodurch sich der Druck in der Radbremse RB1 in den Vorratsbehälter VB abbauen kann. Der Druckaufbau in der Radbremse RB2 erfolgt analog. Selbstverständlich kann der Druck in den Radbremsen RB1 und RB2 auch simultan aufgebaut und abgebaut werden. Auch ist ein Druckaufbau in der einen Radbremse mittels der Druckversorgungseinrichtung DV1 und gleichzeitig ein Druckabbau in der anderen Radbremse über das zugehörige Auslassventil AV möglich. Bei alleinigem Druckaufbau in den Radbremsen RB3 und RB4 des zweiten Bremskreises BK2 muss entweder das Trennventil TV und/oder die Schaltventile SV1 und SV2 geschlossen und das jeweilige Schaltventil SV3 bzw. SV3 geöffnet sein. Sollte die Druckversorgungseinrichtung DV1 ausfallen, so kann mittels der Betätigungseinrichtung BE ein Druck in einem oder beiden Bremskreisen aufgebaut werden. Hierfür weist die Betätigungseinrichtung BE ein Bremspedal auf, welches auf einen Druckraum begrenzenden Kolben wirkt, wobei durch den Kolben dann aus dem Druckraum Hydraulikmedium in den bzw. die Bremskreise gedrückt wird, wodurch ein Bremsdruck in einer oder allen Radbremsen aufgebaut wird. Hierfür sind die Schaltventile vorzugsweise als Stromlos-Offene-Ventile ausgebildet.

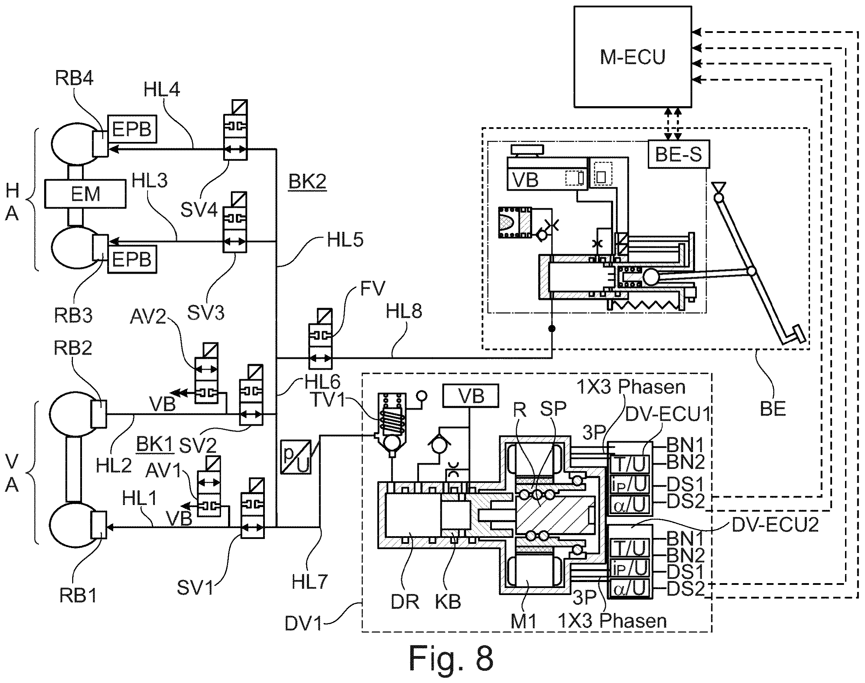

Die Figur 8 zeigt eine weitere mögliche Variante, wobei im Gegensatz zur Figur 7 nur ein Trennventil TV1 vorgesehen ist, welches in dem Gehäuse der Druckversorgungseinrichtung DV1 angeordnet ist. Zusätzlich sind an der Hinterachse HA elektrische Parkierbremsen EPB als weitere Möglichkeit zur Erzeugung von Bremsmoment für den Fehlerfall vorgesehen. Bei Ausfall der Druckversorgung DV1 kann mittels des Hauptbremszylinders HZ über das stromlos geöffnete Ventil FV in beiden Bremskreisen BK1 und BK2 ein Druck in den Radbremsen RB1-RB4 aufgebaut werden. Fällt ein Radkreis aus, muss das jeweilige der Leckage zugeordnete Schaltventil geschlossen betrieben werden, damit dies nicht zum Gesamtausfall der Bremsanlage führt.

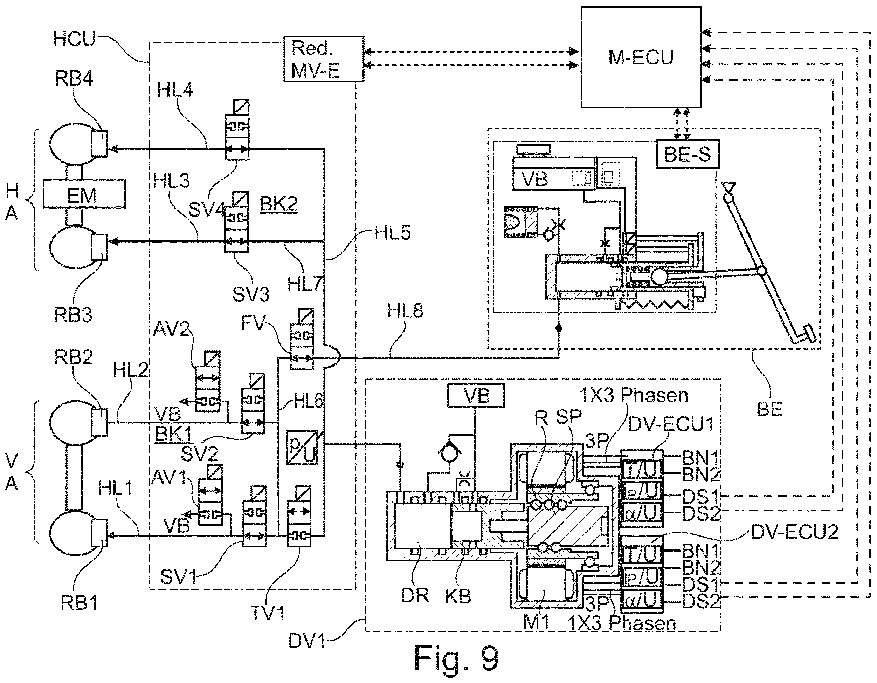

Die Figur 9 zeigt eine Variante, bei der ebenfalls nur ein Trennventil TV1 vorgesehen ist, so dass im Gegensatz zur Variante der Figur 8 nur im Bremskreis der Vorderachse VA bei Ausfall der Druckversorgungseinrichtung DV1 über den Hauptbremszylinder HZ ein Druck aufgebaut werden kann. Das Trennventil ist bei dieser Variante in der Ventilanordnung HCU untergebracht. Im Gegensatz zu Fig.8 ist der Ausfall der Druckversorgung nicht zu kritisch, da im Bremskreis BK2 ein elektrischer Traktionsmotor EM und im Bremskreis BK1 die Betätigungseinheit mit Hauptbremszylinder HZ bei Ausfall der Druckversorgung DV1 zur Verfügung steht.

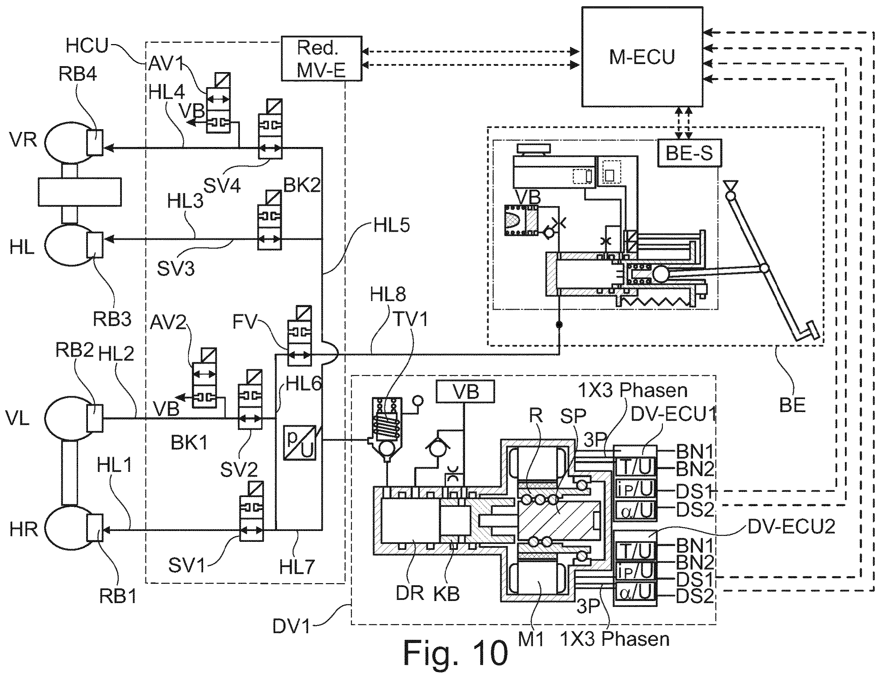

Die Figur 10 zeigt eine Variante bei der kein Elektromotor an einer Achse angeordnet ist und lediglich ein Trennventil TV1 vorgesehen ist. Damit kann, wie bei der Variant von Figur 9 lediglich im Bremskreis BK1 der Vorderachse VA im Notfall über den Hauptbremszylinder HZ ein Druck in den Radbremsen RB1 und RB2 aufgebaut werden, da das Trennventil TV1 in diesem Fall geschlossen ist, um die Druckversorgungseinrichtung DV1 von den Bremskreisen abzukoppeln. Damit auch die ABS- und/oder ESP-Funktion bereitgestellt werden kann ist an der Radbremse RB4 der Hinterachse HA ein zusätzliches Auslassventil AV1 vorgesehen, über dass der Druck in der Radbremse RB4 direkt in den Vorratsbehälter VB abgebaut werden kann.

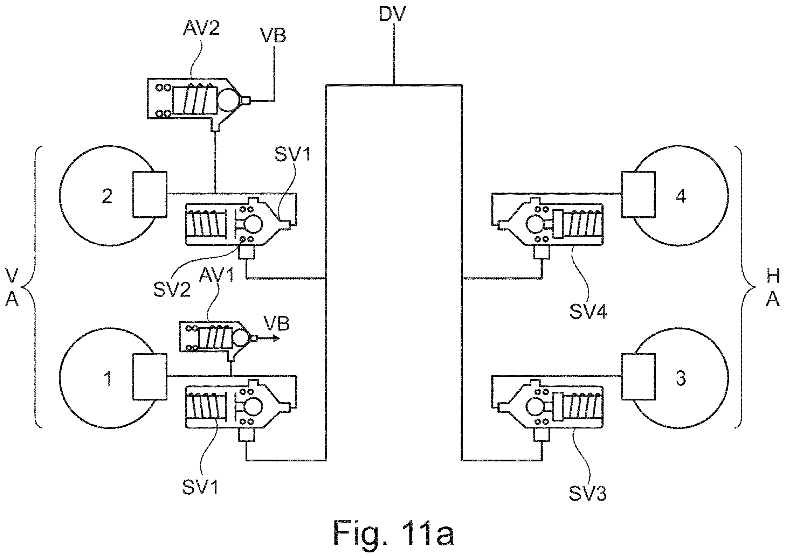

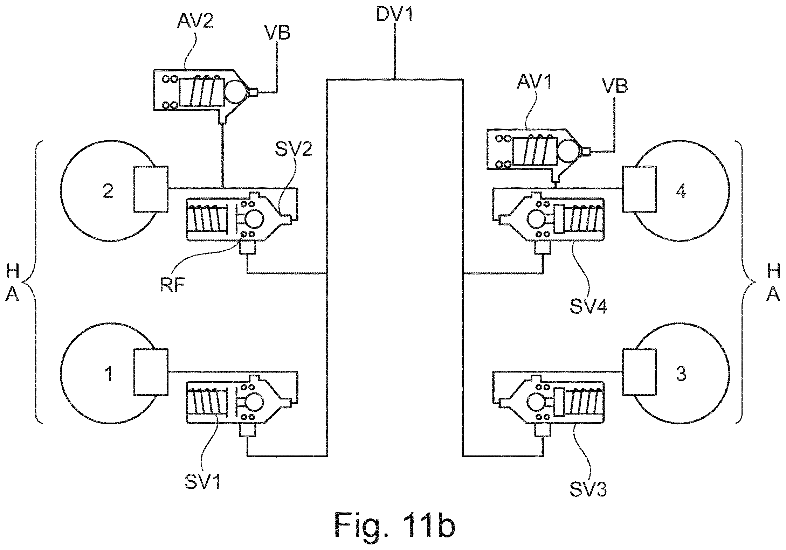

Die Figuren 11a und 11b zeigen einen vorteilhaften Anschluss der Schaltventile SV, die sicherstellt, dass sich die Schaltventile SV bei einem eingeschlossenen Druck in den Radbremsen sicher öffnen. Hierzu sind die Schaltventile mit ihren dem Ventilsitz zugeordneten Anschlüssen mit den Arbeitsräumen der Radbremsen verbunden, so dass der dort eingeschlossene Druck das Ventilstellglied weg vom Ventilsitz der Schaltventils SV drückt. Die Figur 11a zeigt dabei die schwarz-weiß Anordnung und die Figur 11b die diagonale Anordnung der den Radbremsen zugeordneten Auslassventile AV1 und AV2.

### Bezugszeichenliste

- HZ: Hauptbremszylinder (Single)
- a_{HZ}: Hauptachse des Hauptbremszylinders
- a_{DV1}: Achse der ersten Druckversorgungseinrichtung DV1
- a1_{DV2}: horizontale Ausrichtung der Achse der zweiten Druckversorgungseinrichtung DV2 senkrecht zur Achse a_{DV1} der ersten Druckversorgungseinrichtung DV1
- a2_{DV2}: vertikale Ausrichtung der Achse der zweiten Druckversorgungseinrichtung DV2 senkrecht zur Achse a_{DV1} der ersten Druckversorgungseinrichtung DV1
- DV: Druckversorgung
- HCU: Hydraulikcontrolunit
- ECU: elektronische Computing Unit
- ECU-V: Vorderseite der ECU
- ECU-S: Seitliche Wandung der ECU
- ECU-O: Oberseite der ECU
- ECU-H: Hinterseite der ECU, der Spritzwand des Fahrzeugs zugewandt
- EM: elektrischer Antriebsmotor
- PI: Pedalinterface
- SW/H: Spritzwand/Halterung
- St: Stecker
- BKV: Bremskraftverstärker
- NS: Niveausensor
- RZ: Radzylinder
- MV: Magnetventil
- Dr: Drossel
- SV: Saugventil von DV1
- A: Gehäuse für HCU und DV1 und optional DV2
- A1: Teilgehäuse für HCU und DV2
- A2: Teilgehäuse für DV1
- B: Gehäuse für ECU
- C: Gehäuse für HZ und Wegsimulator WS mit Flansch
- a_{DV1}: Motorachse von DV1
- a_{DV2}: Motorachse von DV2
- a_{HZ}: Längsachse vom Hauptbremszylinder HZ
- VB: Vorratsbehälter
- VB_{H}: Hinterer Bereich des Vorratsbehälters
- VB_{M}: Mittlerer Bereich des Vorratsbehälters
- VB_{V}: Vorderer Bereich des Vorratsbehälters
- VA: Vorderachse
- HA: Hinterachse
- 1: Pedalstößel
- 2: Motor
- 3: Zwischengehäuse
- 4: Befestigungsschraube
- 5: Sensorgehäuse
- 6: Drehwinkelsensor
- 7: Verschlussdeckel
- 8: Kolben
- 9a/9b: Anschlüsse zum VB
- 10: Anschlüsse zum RZ
- 11: Anschluss zum HZ
- 12: Flansch von HZ
- 13: Befestigungsschraube
- 14: Befestigungsschraube zu Stirnwand oder Halterung
- 15: elektrische Verbindung Motor von DV2 zu ECU
- 16: elektrische Verbindung von DV1 Motor
- 17: elektrische Verbindung von Drehwinkelsensor
- 18: ECU-Gehäuse
- 19: Steg mit Dichtung
- 20: Treiber für MV
- 21: Anschlusssteg MV
- 22: Kleines PCB
- 22a: elektrische Verbindung der Haupt-PCB zum PCB 22 der ECU
- 23: Haupt-PCB
- 24: HCU-Block
- 25: Bohrung für Exzenter-Kolbenpumpe DV2
- 26: Motor für DV2
- 27: Umriss Kontur 8" Vakuum-BKV
- 28: Anschlagring für Kolben
- 29: Leitung zum VB
- 30: KWS
- 31/31a: Pedalstange
- 32: Federgehäuse
- 33: HZ-Kolben
- 34: Sensorelement
- 35: Target
- 36: Antriebswelle
- 37: Zahnrad
- 38: Zahnstange
- 39: Führungsteil
- 40: Führungsleiste
- 41: Target
- 42: induktiver Sensor
- 43: HZ-Gehäuse
- 44: WS-Kolben
- 44a: WS-Feder
- 45: WS-Dichtung
- 46: Gleitring
- 47: Verbindungsbohrungen WS-HZ und HCU-Block 24
- 48: Gleitringe
- 49: Lagerteil
- 50: Rückstellfeder
- 51: Steckerleiste mit Einpresskontakten
- 52: Sensorgehäuse 1
- 52a: Sensorgehäuse 2
- 53: Messflansch
- 54: Verschlussstopfen
- 55: Befestigung Sensorgehäuse
- 56: Gewindemutter
- 57: Gewindespindel
- 58: KGT
- 59: Kolben
- 60: Motorkontaktierung zu ECU
- 61: Gehäusedichtung
- 62: Motorgehäuse
- 63: Motorlager
- 64: Rotor
- 100: Öffnung des Vorratsbehälters
- 101: Verschlussdeckel des Vorratsbehälters
- 152: verschließbare Öffnung

## Patentansprüche

1. Verfahren zum Betreiben einer Betätigungseinrichtung für ein ganz oder teilweise hydraulisch wirkendes Bremssystem für ein Fahrzeug;
wobei die Betätigungseinrichtung aufweist:
- einen Hauptbremszylinder (HZ) mit einer Kolben-Zylinder-Einheit, die einen Kolben und einen Arbeitsraum aufweist, wobei der Arbeitsraum über mindestens ein stromlos offenes Ventil (FV) mit mindestens einem Radbremskreis (BK1, BK2) verbindbar ist,
- mindestens eine hydraulisch wirkende Radbremse (RB), die einem Bremskreis (BK1, BK2) zugeordnet ist und die je mindestens einem eigenen steuerbaren Schaltventil (SV) zugeordnet ist, mit dem die Radbremse (RB) mit dem jeweiligen Bremskreis (BK1, BK2) zum Druckaufbau (P_{auf}) und Druckabbau (P_{ab}) verbindbar ist,
- eine Druckversorgung (DV1), die durch einen Elektromotor (2) angetrieben wird und deren Kolben mittels des Elektromotors (2) in einem Zylinder der Druckversorgung (DV1) verstellbar ist, und
- mindestens ein gesteuertes Auslassventil (AV, ZAV), das unmittelbar mit einem Vorratsbehälter (VB) verbunden ist und über das direkt Hydraulikmedium im Regelungsbetrieb (ABS) aus der jeweiligen Radbremse (RB) oder dem Bremskreis (BK1, BK2) in einen Vorratsbehälter (VB) ableitbar ist;
**dadurch gekennzeichnet, dass** ein Druckabbau in einer oder mehreren Radbremsen (RB) über mindestens zwei der folgenden Elemente gleichzeitig erfolgt: das oder die Auslassventile (AV, ZAV) und/oder die Druckversorgung (DV1);

2. Verfahren zum Betreiben einer Betätigungseinrichtung für ein ganz oder teilweise hydraulisch wirkendes Bremssystem für ein Fahrzeug,
wobei die Betätigungseinrichtung aufweist:
- einen Hauptbremszylinder (HZ) mit einer Kolben-Zylinder-Einheit, die einen Kolben und einen Arbeitsraum aufweist, wobei der Arbeitsraum über mindestens ein stromlos offenes Ventil (FV) mit mindestens einem Radbremskreis (BK1, BK2) verbindbar ist,
- mindestens eine hydraulisch wirkende Radbremse (RB), die einem Bremskreis (BK1, BK2) zugeordnet ist und die je mindestens einem eigenen steuerbaren Schaltventil (SV) zugeordnet ist, mit dem die Radbremse (RB) mit dem jeweiligen Bremskreis (BK1, BK2) zum Druckaufbau (P_{auf}) und Druckabbau (P_{ab}) verbindbar ist,
- eine Druckversorgung (DV1), die durch einen Elektromotor (2) angetrieben wird und deren Kolben mittels des Elektromotors (2) in einem Zylinder der Druckversorgung (DV1) verstellbar ist,
- mindestens ein gesteuertes Auslassventil (AV, ZAV), das unmittelbar mit einem Vorratsbehälter (VB) verbunden ist und über das direkt Hydraulikmedium im Regelungsbetrieb (ABS) aus der jeweiligen Radbremse (RB) oder dem Bremskreis (BK1, BK2) in einen Vorratsbehälter (VB) ableitbar ist, **dadurch gekennzeichnet, dass** die Betätigungseinrichtung weiter aufweist :
- eine übergeordnete Steuereinheit (M-ECU), die mit der Druckversorgung (DV1) sowie mit einer elektrischen Parkbremse (EPB) und/oder einem elektrische Antriebsmotor (EM) des Fahrzeugs in Signalverbindung steht,
- wobei Schaltventile (SV1, SV2) zur Verbindung der Druckversorgungseinrichtung (DV1) mit den Radbremsen (RB) bzw. zur Trennung von diesen vorgesehen sind,
wobei durch die übergeordnete Steuereinheit (M-ECU) ein radspezifischer Bremsvorgang gesteuert wird, wobei mittels der Druckversorgung (DV1) Druck aufgebaut oder abgebaut wird.

3. Verfahren nach einem der vorhergehenden Ansprüche, **dadurch gekennzeichnet, dass** der Druckaufbau und Druckabbau im Bremskraftverstärkerbetrieb ausschließlich über die Kolbensteuerung der Kolben-Zylinder-Einheit (DV1) erfolgt und die Auslassventile (AV) in diesem Betriebszustand geschlossen sind.

4. Verfahren nach einem der vorhergehenden Ansprüche, **dadurch gekennzeichnet, dass** der Druckaufbau und Druckabbau im Rekuperationsbetrieb mittels eines Bremsmoments eines Elektromotors ausschließlich über die Kolbensteuerung der Kolben-Zylinder-Einheit (DV1) erfolgt und die Auslassventile (AV) in diesem Betriebszustand geschlossen sind.

5. Verfahren nach einem der vorhergehenden Ansprüche, **dadurch gekennzeichnet, dass** der Druckaufbau ausschließlich über die Kolbensteuerung der Kolben-Zylinder-Einheit (DV1) im Multiplexbetrieb erfolgt und der Druckaufbau und Druckabbau über offene/geschlossene Schaltventile (SV) gleichzeitig oder nacheinander bei geschlossenen Auslassventilen erfolgt und/oder der Druckabbau über das oder die Auslassventile (AV) erfolgt.

6. Verfahren nach Anspruch 5, **dadurch gekennzeichnet, dass** beim Druckabbau über Auslassventile (AV1, AV2, ZAV) der Druckgeber (DG, DG1, DG2, DG3) zur Druckabbauregelung verwendet wird.

7. Verfahren nach Anspruch 6, **dadurch gekennzeichnet, dass** die Auslassventile (AV, AV1, AV2) entweder pulsweitenmoduliert bzw. PWMgetaktet oder stromgeregelt betrieben werden und den Öffnungsquerschnitt der Auslassventile (AV, AV1, AV2) steuern.

8. Verfahren nach einem der vorhergehenden Ansprüche, **dadurch gekennzeichnet, dass** bei einer Druckregelung die Druck-Volumen-Kennlinie insbesondere zur Diagnose und Druckänderungssteuerung bzw. Vorsteuerung bei der Regelung verwendet wird.

9. Verfahren nach einem der vorhergehenden Ansprüche, **dadurch gekennzeichnet, dass** der Druckversorgung (DV1) mindestens ein Trennventil vorgeschaltet ist und in bestimmten Betriebszuständen (z.B. Lufteinschluss, Fading) ein Volumen vom Vorratsbehälter über ein Rückschlagventil und durch Rückfahren des Kolbens der Druckversorgungseinrichtung nachgefördert wird.

10. Verfahren nach einem der vorhergehenden Ansprüche, **dadurch gekennzeichnet, dass** bei einer Druckregelung der Strom des Elektromotors zur Druckregelung verwendet wird, insbesondere wenn der Druckgeber ausgefallen ist oder der Druckgeber für die Druckabbausteuerung über das oder die Auslassventile (AV1, AV2, ZAV) verwendet wird, während gleichzeitig Druck über die Druckversorgung aufgebaut wird.

11. Verfahren nach einem der vorhergehenden Ansprüche, **dadurch gekennzeichnet, dass** die Bremskraft der Parkbremse und/oder das Drehmoment des elektrischen Antriebsmotors zur Bremskraftverzögerung eingesetzt wird, insbesondere bei Ausfall von Modulen.

## Claims

1. A method for operating an actuating device for a wholly or partially hydraulically operating braking system for a vehicle, wherein the actuating device comprises:
- a master brake cylinder (HZ) having a piston-cylinder unit which comprises a piston and a working chamber, wherein the working chamber can be connected to at least one wheel brake circuit (BK1, BK2) via at least one normally open valve (FV),
- at least one hydraulically operating wheel brake (RB) which is assigned to a brake circuit (BK1, BK2) and which is in each case assigned to at least one separate controllable switching valve (SV) with which the wheel brake (RB) can be connected to the respective brake circuit (BK1, BK2) for pressure build-up (_{Pauf}) and pressure reduction (_{Pab}),
- a pressure supply (DV1) which is driven by an electric motor (2) and the piston of which can be adjusted in a cylinder of the pressure supply (DV1) by means of the electric motor (2), and
- at least one controlled outlet valve (AV, ZAV) which is directly connected to a reservoir (VB) and via which hydraulic medium can be diverted directly from the respective wheel brake (RB) or the brake circuit (BK1, BK2) into a reservoir (VB) in control mode (ABS);
**characterized in that** a pressure reduction in one or more wheel brakes (RB) takes place simultaneously via at least two of the following elements: the outlet valve or outlet valves (AV, ZAV) and/or the pressure supply (DV1).

2. The method for operating an actuating device for a wholly or partially hydraulically acting brake system for a vehicle, wherein the actuating device comprises:
- a master brake cylinder (HZ) having a piston-cylinder unit which comprises a piston and a working chamber, wherein the working chamber can be connected to at least one wheel brake circuit (BK1, BK2) via at least one normally open valve (FV),
- at least one hydraulically operating wheel brake (RB) which is assigned to a brake circuit (BK1, BK2) and which is in each case assigned to at least one separate controllable switching valve (SV) with which the wheel brake (RB) can be connected to the respective brake circuit (BK1, BK2) for pressure build-up (_{Pauf}) and pressure reduction (_{Pab}),
- a pressure supply (DV1) which is driven by an electric motor (2) and the piston of which can be adjusted in a cylinder of the pressure supply (DV1) by means of the electric motor (2), and
- at least one controlled outlet valve (AV, ZAV) which is directly connected to a reservoir (VB) and via which hydraulic medium can be diverted directly from the respective wheel brake (RB) or the brake circuit (BK1, BK2) into a reservoir (VB) in control mode (ABS);
**characterized in that** the actuating device further comprises:
- a subordinate control unit (M-ECU) which is in signal communication with the pressure supply (DV1) as well as with an electric parking brake (EPB) and/or an electric drive motor (EM) of the vehicle;
- wherein switching valves (SV1, SV2) are provided for connecting the pressure supply device (DV1) to the wheel brakes (RB) or for disconnecting it from them,
wherein a wheel-specific braking process is controlled by the subordinate control unit (M-ECU), wherein pressure is built up or reduced by means of the pressure supply (DV1).

3. The method according to any one of the preceding claims, **characterized in that** the pressure build-up and the pressure reduction during brake booster operation take place exclusively via the piston control of the piston-cylinder unit (DV1), and the outlet valves (AV) are closed in this operating state.

4. The method according to any one of the preceding claims, **characterized in that** the pressure build-up and the pressure reduction in recuperation operation by means of a braking torque of an electric motor takes place exclusively via the piston control of the piston-cylinder unit (DV1), and the outlet valves (AV) are closed in this operating state.

5. The method according to any one of the preceding claims, **characterized in that** the pressure build-up takes place exclusively via the piston control of the piston-cylinder unit (DV1) in multiplex operation, and the pressure build-up and the pressure reduction take place via open/closed switching valves (SV) simultaneously or successively with the outlet valves closed, and/or the pressure reduction takes place via the exhaust valve or exhaust valves (AV).

6. The method according to claim 5, **characterized in that** during pressure reduction via outlet valves (AV1, AV2, ZAV) the pressure transmitter (DG, DG1, DG2, DG3) is used for pressure reduction control.

7. The method according to claim 6, **characterized in that** the outlet valves (AV, AV1, AV2) are operated either pulse-width modulated and PWM-clocked, respectively, or current-controlled, and control the opening cross-section of the outlet valves (AV, AV1, AV2).

8. The method according to any one of the preceding claims, **characterized in that** in the case of pressure control, the pressure-volume characteristic curve is used in particular for diagnosis and pressure change control or feedforward control in the control.

9. The method according to any one of the preceding claims, **characterized in that** at least one separating valve is connected upstream of the pressure supply device (DV1) and, in certain operating states (e.g. air inclusion, fading), a volume is resupplied from the reservoir via a check valve and by retracting the piston of the pressure supply device.

10. The method according to any one of the preceding claims, **characterized in that** in the case of pressure control, the current of the electric motor is used for pressure control, in particular if the pressure transmitter has failed or the pressure transmitter is used for pressure reduction control via the outlet valve or valves (AV1, AV2, ZAV) while pressure is simultaneously built up via the pressure supply.

11. The method according to any one of the preceding claims, **characterized in that** the braking force of the parking brake and/or the torque of the electric drive motor is used for braking force deceleration, in particular in the event of a failure of modules.

## Revendications

1. Procédé de fonctionnement d'un dispositif d'actionnement pour un système de freinage à action entièrement ou partiellement hydraulique pour un véhicule ;
dans lequel le dispositif d'actionnement comprend
- un maître-cylindre de frein (HZ) avec une unité piston-cylindre, qui présente un piston et une chambre de travail, la chambre de travail pouvant être reliée à au moins un circuit de freinage de roue (BK1, BK2) par l'intermédiaire d'au moins une soupape (FV) ouverte sans courant,
- au moins un frein de roue (RB) à action hydraulique, qui est associé à un circuit de freinage (BK1, BK2) et qui est associé respectivement à au moins une soupape de commutation (SV) propre pouvant être commandée, avec laquelle le frein de roue (RB) peut être relié au circuit de freinage (BK1, BK2) respectif pour l'établissement de la pression (_{Pauf}) et la réduction de la pression (_{Pab}),
- une alimentation en pression (DV1), qui est entraînée par un moteur électrique (2) et dont le piston peut être déplacé dans un cylindre de l'alimentation en pression (DV1) au moyen du moteur électrique (2), et
- au moins une soupape d'échappement commandée (AV, ZAV), qui est reliée directement à un réservoir (VB) et par l'intermédiaire de laquelle du fluide hydraulique peut être dérivé directement, en mode de régulation (ABS), du frein de roue respectif (RB) ou du circuit de freinage (BK1, BK2) dans un réservoir (VB) ;
**caractérisé en ce qu'**une réduction de pression dans un ou plusieurs freins de roue (RB) est effectuée simultanément par l'intermédiaire d'au moins deux des éléments suivants : la ou les valves d'échappement (AV, ZAV) et/ou l'alimentation en pression (DV1) ;

2. Procédé de fonctionnement d'un dispositif d'actionnement pour un système de freinage à action entièrement ou partiellement hydraulique pour un véhicule, le dispositif d'actionnement comprenant :
- un maître-cylindre de frein (HZ) avec une unité piston-cylindre, qui présente un piston et une chambre de travail, la chambre de travail pouvant être reliée à au moins un circuit de freinage de roue (BK1, BK2) par l'intermédiaire d'au moins une soupape (FV) ouverte sans courant,
- au moins un frein de roue (RB) à action hydraulique, qui est associé à un circuit de freinage (BK1, BK2) et qui est associé respectivement à au moins une soupape de commutation (SV) propre pouvant être commandée, avec laquelle le frein de roue (RB) peut être relié au circuit de freinage (BK1, BK2) respectif pour l'établissement de la pression (_{Pauf}) et la réduction de la pression (_{Pab}),
- une alimentation en pression (DV1), qui est entraînée par un moteur électrique (2) et dont le piston peut être déplacé dans un cylindre de l'alimentation en pression (DV1) au moyen du moteur électrique (2),
- au moins une soupape d'échappement commandée (AV, ZAV), qui est reliée directement à un réservoir (VB) et par l'intermédiaire de laquelle du fluide hydraulique peut être évacué directement, en mode de régulation (ABS), du frein de roue respectif (RB) ou du circuit de freinage (BK1, BK2) dans un réservoir (VB), **caractérisé en ce que** le dispositif d'actionnement présente en outre
- une unité de commande supérieure (M-ECU) qui est en liaison de signalisation avec l'alimentation en pression (DV1) ainsi qu'avec un frein de stationnement électrique (EPB) et/ou un moteur d'entraînement électrique (EM) du véhicule ;
- des soupapes de commutation (SV1, SV2) étant prévues pour relier le dispositif d'alimentation en pression (DV1) aux freins de roue (RB) ou pour le séparer de ceux-ci,
une opération de freinage spécifique à la roue étant commandée par l'unité de commande supérieure (M-ECU), la pression étant établie ou supprimée au moyen de l'alimentation en pression (DV1).

3. Procédé selon l'une des revendications précédentes, **caractérisé en ce que** la montée en pression et la baisse de pression en mode de freinage assisté s'effectuent exclusivement par la commande des pistons de l'unité piston-cylindre (DV1) et les soupapes d'échappement (AV) sont fermées dans cet état de fonctionnement.

4. Procédé selon l'une des revendications précédentes, **caractérisé en ce que** la montée en pression et la baisse de pression en mode de récupération au moyen d'un couple de freinage d'un moteur électrique s'effectuent exclusivement par l'intermédiaire de la commande de piston de l'unité piston-cylindre (DV1) et les soupapes d'échappement (AV) sont fermées dans cet état de fonctionnement.

5. Procédé selon l'une des revendications précédentes, **caractérisé en ce que** la montée en pression s'effectue exclusivement par la commande de piston de l'unité piston-cylindre (DV1) en mode multiplexé et la montée en pression et la baisse de pression s'effectuent par des soupapes de commutation ouvertes/fermées (SV) simultanément ou successivement lorsque les soupapes d'échappement sont fermées et/ou la baisse de pression s'effectue par la ou les soupapes d'échappement (AV).

6. Procédé selon la revendication 5, **caractérisé en ce que**, lors de la réduction de pression par des soupapes d'échappement (AV1, AV2, ZAV), le transmetteur de pression (DG, DG1, DG2, DG3) est utilisé pour la régulation de la réduction de pression.

7. Procédé selon la revendication 6, **caractérisé en ce que** les soupapes d'échappement (AV, AV1, AV2) sont actionnées soit par modulation de largeur d'impulsion ou par synchronisation PWM, soit par régulation de courant et commandent la section transversale d'ouverture des soupapes d'échappement (AV, AV1, AV2).

8. Procédé selon l'une des revendications précédentes, **caractérisé en ce que**, dans le cas d'une régulation de pression, la courbe caractéristique pression-volume est utilisée en particulier pour le diagnostic et la commande de changement de pression ou la commande pilote lors de la régulation.

9. Procédé selon l'une des revendications précédentes, **caractérisé en ce qu'**au moins une soupape d'isolement est montée en amont de l'alimentation en pression (DV1) et **en ce que**, dans certains états de fonctionnement (par exemple inclusion d'air, fading), un volume est réacheminé depuis le réservoir de stockage par l'intermédiaire d'un clapet anti-retour et par recul du piston du dispositif d'alimentation en pression.

10. Procédé selon l'une quelconque des revendications précédentes, **caractérisé en ce que**, dans le cas d'une régulation de pression, on utilise le courant du moteur électrique pour réguler la pression, notamment lorsque le capteur de pression est défaillant ou que le capteur de pression est utilisé pour la commande de réduction de pression via la ou les vannes d'échappement (AV1, AV2, ZAV), tout en établissant la pression via l'alimentation en pression.

11. Procédé selon l'une des revendications précédentes, **caractérisé en ce que** la force de freinage du frein de stationnement et/ou le couple du moteur d'entraînement électrique sont utilisés pour la décélération de la force de freinage, notamment en cas de défaillance des modules.
